Europäisches Patentamt

European Patent Office

Office européen des brevets

(19)

(11) Publication number: **0 050 912**
**B1**

(12) # EUROPEAN PATENT SPECIFICATION

(45) Date of publication of patent specification: **02.05.85**

(51) Int. Cl.⁴: **B 01 J 23/88, C 10 G 45/08**

(21) Application number: **81302651.5**

(22) Date of filing: **15.06.81**

(54) **Catalyst and process for the hydrotreating of nitrogen-containing feeds.**

(30) Priority: **24.10.80 US 200544**

(43) Date of publication of application:
**05.05.82 Bulletin 82/18**

(45) Publication of the grant of the patent:
**02.05.85 Bulletin 85/18**

(84) Designated Contracting States:
**AT BE CH DE FR GB IT LI NL SE**

(56) References cited:
**EP-A-0 016 599**
**FR-A-1 551 473**
**GB-A-1 446 175**
**GB-A-2 011 463**
**US-A-3 004 913**
**US-A-3 752 776**
**US-A-4 008 149**

(73) Proprietor: **Standard Oil Company**
**200 East Randolph Drive**
**Chicago Illinois 60601 (US)**

(72) Inventor: **Tait, Andrew Martin**
**5 South 414 N. Columbia Street**
**Naperville Illinois 60540 (US)**
Inventor: **Nevitt, Thomas Dickey**
**4 S 757 Karns Road**
**Naperville Illinois 60540 (US)**
Inventor: **Hensley, Albert Lloyd, Jr.**
**1204 35th Street**
**Munster Indiana 46321 (US)**

(74) Representative: **Laredo, Jack Joseph et al**
**Elkington and Fife High Holborn House 52/54**
**High Holborn**
**London, WC1V 6SH (GB)**

Courier Press, Leamington Spa, England.

0 050 912

## Description

Background of the invention

This invention is related to the catalytic treatment in the presence of hydrogen of hydrocarbon streams containing large concentrations of nitrogen compounds to remove nitrogen compounds therefrom and the catalyst useful therein.

In United States Patent 4,181,602, Quick, et al., disclose a process for the hydrotreating of a heavy hydrocarbon stream wherein said stream is contracted under suitable conditions and in the presence of hydrogen with a catalyst comprising (1) the metals of molybdenum, chromium, and cobalt, (2) their oxides, (3) their sulfides, or (4) mixtures thereof on a large-pore, catalytically active alumina, said molybdenum being present in an amount within the range of 5 wt% to 15 wt%, calculated as $MoO_3$ and based upon the total catalyst weight, said chromium being present in an amount within the range of 5 wt% to 20 wt% calculated as $Cr_2O_3$ and based upon the total catalyst weight, said cobalt being present in an amount within the range 0.1 wt% to 5 wt% calculated as CoO and based upon the total catalyst weight, and said catalyst possessing a pore volume within the range of about 0.4 cc/gm to about 0.8 cc/gm, a surface area within the range of about 150 $m^2$/gm to about 300 $m^2$/gm, and an average pore diameter within the range of about 100 Å to about 200 Å.

In United States Patent 4,224,144, Hensley, Jr., et al., disclose the catalytic hydrotreatment of petroleum distillates and similar hydrocarbon materials in the presence of a catalyst comprising a hydrogenation component comprising chromium, molybdenum, and a Group VIII metal deposited upon a porous refractory inorganic oxide support or carrier, such as alumina, silica-alumina, silica, magnesia, zirconia, and similar materials. They disclose that such a catalyst and process can be used successfully to remove nitrogen and sulfur from a hydrocarbon stream selected from petroleum distilates, tar sands distillates, and shale oil.

In United States Patent 4,218,308, Itoh, et al., disclose a catalyst comprising a silica-alumina carrier having a silica content that is less than 40 wt% and at least one noble metal component of Group VIII. The catalyst contains (1) pores having a diameter of smaller than 600 Å occupying at least 90% of the total pore volume and (2) pores having a diameter of 150 to 600 Å occupying at least 40% of the total volume of pores having a diameter of smaller than 600 Å. They indicate that such catalyst, which is characterized further in that it has a specific surface area of at least about 200 $m^2$/gm and a bulk density of less than about 0.6 gm/ml, is capable of effectively removing aromatic compounds contained in a hydrocarbon oil and is useful in the production of jet fuels, kerosene, and white oils.

European Patent No. 0016599 discloses a process for the hydrotreating of a hydrocarbon stream to remove nitrogen and sulfur, wherein the catalyst employed comprises chromium and molybdenum, and at least one Group VIII metal e.g. cobalt, deposited on a support that can be alumina, silica, or silica alumina. Preferably the catalyst has a support of 100% alumina.

French Patent 1,551,473 discloses a catalyst having a support of alumina and 22 to 40 wt% silica and a hydrogenation component comprising two or more than two metals from groups VIB and VIII.

United States Patent 3,004,913 discloses catalysts having hydrogenating components of molybdenum and cobalt deposited upon a support containing 15.6—55.5 wt% of silica based upon the weight of the support.

Itoh, et al, United States Patent 4,008,149, is directed to a hydrorefining catalyst and to its use in a process for hydro-refining heavy hydrocarbon oils containing sulfur, nitrogen, and metal contaminants. The catalyst comprises one or more metals selected from the metals of Groups VI and VIII supported on an alumina-containing carrier containing from 5 to 25 wt% silica. The catalyst has a specific surface area in the range of 250 to 300 $m^2$/gm and a pore volume distribution characterised in that the volume of pores having a diameter of 60 to 150 Å is at least 80% of the volume of pores having a diameter of 0 to 150 Å and the volume of pores having a diameter of 150 to 300 Å is less than 20% of the volume of pores having a diameter of 0 to 300 Å. This Itoh, et al., patent, like the above-discussed art, is deficient in its disclosure of a catalyst comprising two specific metals of Group VI and a metal of Group VIII. It does consider multiple hydrogenating metals, but does not present any combination containing two metals of Group VI. On the other hand, two of the metals combinations that it does suggest contain two metals of Group VIII.

The present invention is based on the discovery that when the hydrogenating component which is employed in the catalyst composition and in the hydrodenitrogenation of heavy hydrocarbon streams containing substantial amounts of nitrogen compounds as discussed below, namely, at least 0.2 wt% of nitrogen, and selected from heavy petroleum hydrocarbon streams, hydrocarbon streams derived from coal, hydrocarbon streams derived from tar sands and hydrocarbon streams derived from oil shale, more particularly whole shale oil, is specially selected from the various metals from Groups VIB and VIII of the Periodic Table discussed in the prior art references so that it comprises the combination of both chromium and molybdenum from Group VIB in association with at least one metal from Group VIII, superior hydrodenitrogenation results are obtained with a silica alumina support in which the silica proportion may range from 10 wt.% to 50 wt% based on the weight of the support.

In other words there has been found a valuable hydrogenation catalyst which comprises a hydrogenation component comprising chromium, molybdenum and at least one metal of Group VIII and a

2

porous alumina-silica support, which support contains silica in an amount within the range of 10 wt% to 50 wt%, based upon the weight of the catalyst support.

Summary of the invention

There is provided a catalytic composition possessing a superior hydrodenitrogenation activity and a process for the hydrodenitrogenation of a hydrocarbon stream containing a substantial amount of nitrogen compounds, such as a whole shale oil, which process employs the aforesaid catalytic composition.

The present invention provides a catalyst which comprises a hydrogenation component comprising chromium, molybdenum, and at least one metal from Group VIII of the Periodic Table of Elements deposited upon a porous alumina-silica support, the silica of said support being present in an amount within the range of 10 wt% to 50 wt%, based upon the weight of said support and said chromium, molybdenum, and metal from Group VIII being present in the elemental form, as oxides, as sulphides, or mixtures thereof. Typically, the catalyst will have a surface area within the range of 150 m$^2$/gm to 350 m$^2$/gm, a pore volume within the range of 0.4 cc/gm to 1.0 cc/gm, and an average pore diameter within the range of 60 Å (6 nm) to 150 Å (15 nm).

The process comprises contacting the hydrocarbon stream, e.g., a whole shale oil, under hydrodenitrogenation conditions and in the presence of hydrogen with the aforesaid catalyst.

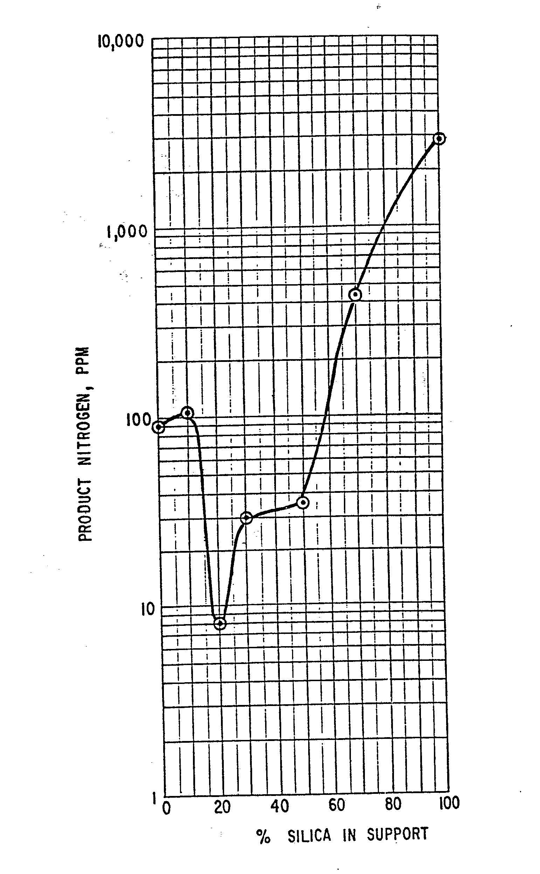

Brief description of the drawing

The accompanying figure presents the effect of the composition of the catalyst support on the product quality, when hydrotreating shale oil.

Detailed description of the invention

The present invention is directed to a novel process for the hydrodenitrogenation of a hydrocarbon stream containing a substantial amount of nitrogen compounds and to the catalyst employed in such process.

The catalyst and the process of the present invention can be used conveniently to treat a hydrocarbon stream containing a substantial amount of nitrogen compounds. The phrase "containing a substantial amount of nitrogen compounds" refers to an amount that will result in at least 0.2 wt% nitrogen in the particular stream. Such hydrocarbon streams are selected from the group consisting of heavy petroleum hydrocarbon streams, petroleum hydrocarbon distillates, hydrocarbon streams derived from coal, hydrocarbon streams derived from tar sands, and hydrocarbon streams derived from oil shale. Typical examples of heavy petroleum hydrocarbon streams are virgin gas oils, vacuum gas oils, or coker gas oils. Hydrocarbon streams derived from oil shale can be a whole shale oil or any fraction thereof. Such feedstocks often contain from 0.2 wt% nitrogen to 3.0 wt% nitrogen, or more.

Such hydrocarbon feeds often contain substantial quantities of nitrogen compounds and such nitrogen compounds must be removed therefrom to allow downstream processing and avoid low quality fuels. One way of removing such nitrogen compounds comprises the hydrodenitrogenating of the hydrocarbon stream in the presence of hydrogen, under suitable conditions, and in the presence of a suitable catalyst.

The catalyst of the present invention, which catalyst is suitable as a catalyst for the hydrodenitrogenation of hydrocarbon streams containing a substantial amount of nitrogen compounds, is, broadly, a catalyst which comprises a hydrogenation component comprising chromium, molybdenum, and at least one metal from Group VIII of the Periodic Table of Elements deposed upon a porous alumina-silica support, the silica of said support being present in an amount within the range of 10 wt% to 50 wt%, based upon the weight of said support, and said chromium, molybdenum, and metal from Group VIII being present in the elemental form, as oxides, as sulfides, or mixtures thereof.

The hydrogenation component comprises chromium, molybdenum, and at least one metal from Group VIII of the Periodic Table of Elements. The Periodic Table of Elements can be found on page 628 of Webster's Seventh New Collegiate Dictionary, G. & C. Merriam Company, Springfield, Massachusetts, U.S.A. (1963). Preferably, the Group VIII metal is a non-noble metal. Cobalt and nickel are those members of Group VIII that are preferred for the catalyst of the present invention. The components of the hydrogenation component are present in the elemental form, as oxides, as sulfides, or mixtures thereof. The chromium is present in an amount within the range of 3 wt% to 15 wt%, calculated as $Cr_2O_3$; the molybdenum, in an amount within the range of 5 wt% to 25 wt%, calculated as $MoO_3$; and the metal from Group VIII, in an amount within the range of 0.5 wt% to 10 wt%, calculated as the oxide; each amount being based upon the weight of the catalyst. Preferably, the chromium is present in an amount within the range of 7 wt% to 12 wt%, calculated as $Cr_2O_3$; the molybdenum, in an amount within the range of 12 wt% to 18 wt%, calculated as $MoO_3$; and the metal from Group VIII, in an amount within the range of 1 wt% to 5 wt%, calculated as the oxide; each amount being based upon the weight of the catalyst.

The support of the catalyst is an alumina-silica support, that is, it is a mixture of silica and alumina wherein the silica is present in an amount within the range of 10 wt% to 50 wt%, preferably within the range of 15 wt% to 45 wt%, based upon the weight of said support. It is not the typical silica-alumina cracking catalyst which contains from 65 wt% to 95 wt% silica. Moreover, it is not the usual silica-stabilized alumina, which contains up to 5 wt% silica.

The catalyst of the present invention is prepared by depositing chromium, molybdenum, and a Group VIII metal upon a porous refractory support or carrier comprising silica and alumina, the silica being present in an amount within the range of 10 wt% to 50 wt%, based upon the weight of the support. A suitable method for depositing such hydrogenation metals upon the support comprises the impregnation of the support material with compounds of the metals. Desirably, after the hydrogenation metals are deposited upon the support, the material is formed into pellets, or is extruded, and then calcined.

The alumina-silica support is prepared conveniently by co-precipitation from suitable sources of silicon and aluminum, such as silica sols, alumina sols, and mixtures thereof. The sol or mixture of sols can be gelled by the addition of a suitable gelling medium, such as ammonium hydroxide, dried, and calcined.

The catalyst can be prepared by any suitable method for impregnating the hydrogenation component upon the high surface area refractory inorganic oxide support. Such impregnation can be performed with one or more solutions, usually aqueous, of heat-decomposable compounds of the appropriate metals. If a single solution is employed, the impregnation is a co-impregnation. Alternatively, sequential impregnation of the metals from 2 or more solutions can be employed. Generally, the impregnated support is dried at a temperature of at least 250°F (121°C) for a period of at least one hour and calcined in air at a temperature of at least 800°F (427°C), and preferably, at least 1,000°F (538°C), for at least one hour.

The finished catalyst that is employed in the process of the present invention should have a pore volume within the range of 0.4 cc/gm to 1.0 cc/gm, a surface area within the range of 150 m²/gm to 350 m²/gm, and an average pore diameter within the range of 60 Angstrom units (Å) (6 nm) to 150 Å (15 nm). Preferably, the catalyst has a pore volume within the range of 0.4 cc/gm to 0.8 cc/gm, a surface area within the range of 150 m²/gm to 250 m²/gm, and an average pore diameter within the range of 80 Å (8 nm) to 150 Å (15 nm).

Values specified for catalyst surface area were obtained by the BET nitrogen adsorption method. Values specified for pore volume herein where also obtained by nitrogen adsorption, and specified average pore diameters were those were calculated by means of the expression:

$$A.P.D. = \frac{4 \times P.V. \times 10^4}{S.A.}$$

wherein A.P.D.=average pore diameter in Å, P.V.=pore volume in cc/gm, and S.A.=surface area in m²/gm.

The catalyst of the present invention is characterized by the following apparent pore size distribution, as would be obtained by a Digisorb 2500 instrument employing nitrogen desorption techniques: 10% to 35% of the total pore volume in pores having diameters less than 50 Å (5 nm); 30% to 65% of the total pore volume in pores having diameters within the range of 50 Å (5 nm) to 100 Å (10 nm); and 5% to 40% of the total pore volume in pores having diameters greater than 100 Å (10 nm). The term "apparent pore size distribution" is used, since the large range of catalyst-support-composition values makes it very difficult to fix ranges of values for the pore size distribution.

An advantage of the catalyst of the present invention is its high-temperature stability, i.e., its ability to perform satisfactorily at high temperatures over an extended period of time. The use of a high temperature hastens the denitrogenation reaction and does not appear to affect deleteriously the performance of the catalyst. The chromium in the hydrogenation component of the catalyst provides the high temperature stability. The combination of a Group VIII metal and molybdenum affords an active component for hydrogenation, denitrogenation and desulfurization. The presence of silica affords sufficient acidity to promote denitrogenation.

The acidity of the catalyst of the present invention can be enhanced by the addition of a halogen, for example, fluorine or chlorine.

Prior to its use in the process of the present invention, the catalyst is subjected to a sulfiding pretreatment. This sulfiding pretreatment is necessary because the metal constituents of the hydrogenation component should be in a partially-reduced state. The sulfiding will provide such partially-reduced metals, but will not reduce the metals completely to the elemental form, which form is inactive.

A convenient sulfiding pretreatment comprises heating the catalyst to a temperature within the range of 250°F (121°C) to 350°F (177°C), passing a gas mixture of hydrogen sulfide in hydrogen over and through the catalyst at a variable pressure for a period of 0.5 hour to 2 hours, raising the temperature to a value within the range of 350°F (177°C) to 450°F (232°C), continuing to pass the gas mixture at this latter temperature over and through the catalyst for an additional period of 0.5 hour to 2 hours, raising the temperature to a value of 650°F (343°C) to 750°F (399°C), and continuing to pass the hydrogen sulfide-hydrogen gas mixture through the catalyst for an additional period of 0.5 hour to 2 hours. Suitably, sufficient gas should be employed to provide 110% of the stoichiometric amount of hydrogen sulfide needed to sulfide the metals of the hydrogenation component. The concentration of hydrogen sulfide in the gas is not critical. Subsequently, hydrogen-containing gas is introduced into the reactor and permitted to flow through the catalyst at operating pressure. A suitable flow rate for the hydrogen-containing gas is the hydrogen addition rate provided hereinbelow. The hydrocarbon feed to be treated by the process can then be introduced into the reactor.

While the above sulfiding pretreatment is a convenient way of pretreating the catalyst, other suitable

0 050 912

methods known to those skilled in the art can be employed. For example, carbon disulfide can be added to the zone containing the catalyst, or a light hydrocarbon oil containing sulfur can be passed over the catalyst for a time that is sufficient to provide the appropriate metal sulfides on the catalyst.

The catalyst of the present invention is employed in the process of the present invention in the form of a fixed-bed or as an ebullated bed of particles. In the case of a fixed-bed catalyst, the particle size of the catalyst should be within the range of 1/32 in. (0.08 cm) to 1.8 in. (0.32 cm) effective diameter. The catalyst of the present invention can be used conveniently in a fixed-bed in the form of pellets, spheres, or extrudates. It is contemplated further that the catalyst can be present as other shapes, such as a clover leaf, cross-shaped, or C-shaped, as disclosed by Hoekstra, et al., in United States Patents 3,674,680 and 3,764,565.

The conditions that are employed in the process of the present invention comprise a temperature within the range of 700°F (371°C) to 800°F (427°C), a hydrogen partial pressure within the range of 1,000 psi (6,890 kPa) to 2,500 psi (17,225 kPa), a liquid hourly space velocity (LHSV) within the range of 0.1 volume of hydrocarbons per hour per volume of catalyst to 5 volumes of hydrocarbon per hour per volume of catalyst, and a hydrogen recycle rate or hydrogen addition rate within the range of 2,000 standard cubic feet of hydrogen per barrel of hydrocarbon (SCFB) (359 $m^3/m^3$) to 20,000 SCFB (3,596 $m^3/m^3$). Preferably, the conditions comprise a temperature within the range of 740°F (393°C) to 790°F (416°C), a hydrogen partial pressure within the range of 1,600 psi (11,024 kPa) to 2,000 psi (13,780 kPa), a LHSV within the range of 0.3 volume of hydrocarbon per hour per volume of catalyst to 2 volumes of hydrocarbon per hour per volume of catalyst, and a hydrogen recycle rate or hydrogen addition rate within the range of 6,000 SCFB (1,079 $m^3/m^3$) to 14,000 SCFB (2,517 $m^3/m^3$).

The following specific examples are being presented in order to facilitate the understanding of the present invention and are presented for the purposes of illustration only and are not intended to limit the scope of the present invention.

Eight catalysts were prepared and tested for their ability to hydrodenitrogenate a whole shale oil that had been obtained from in situ retorting of oil shale by the Occidental Petroleum Corporation. Each of the eight catalysts and the test of that particular catalyst are presented in one of the following Examples I through VIII.

Example I

A catalyst, identified hereinafter as Catalyst A, was prepared to contain 1.5 wt% CoO, 10 wt% $Cr_2O_3$, and 10 wt% $MoO_3$ on a support of silica.

A 154-gram portion of large-mesh silica gel in the form of 8/14-mesh particles, i.e., particles that would pass through an 8-mesh screen (Tyler) having openings with a diameter of 2.362 mm but be retained upon a 14-mesh screen (Tyler) having openings with a diameter of 1.168 mm obtained from the Davison Chemical Division of W. R. Grace & Co., which had been calcined at a temperature of 1,000°F (538°C), was impregnated with a solution that had been prepared by dissolving 32.6 grams of $(NH_4)_2Cr_2O_7$ in 145 milliliters of distilled water. After the composite had been mixed and had been left standing for several hours, the material was put into a vacuum oven at a temperature of 212°F (100°C) overnight (approximately 16 hours) and then calcined for 16 hours in static air at a temperature of 1,000°F (538°C).

The calcined material was then impregnated with a solution that had been prepared by dissolving 11.4 grams of $Co(NO_3)_2 \cdot 6H_2O$ and 24.0 grams of $(NH_4)_6Mo_7O_{24} \cdot 4H_2O$ in distilled water and adding sufficient distilled water to make a volume of 120 milliliters of solution. The solution was poured over the catalyst and mixed therewith. Upon mixing, the solid material became dry; therefore, excess distilled water was added and mixed with the solid material periodically. The material was left overnight (approximately 16 hours) in still air at ambient temperature. The next day it was dried under a heat lamp and then in a vacuum oven for 4 hours at a temperature of 212°F (100°C). The dried material was then calcined in air at a temperature of 1,000°F (538°C) overnight (approximately 16 hours). The calcined material, Catalyst A, was ground subsequently to a 14/20-mesh material, i.e., a material that would pass through a 14-mesh screen (Tyler) having openings with a diameter of 1.168 mm, but be retained upon a 20-mesh screen (Tyler), having openings with a diameter of 0.833 mm.

Catalyst A was tested in an automated hydrotreating pilot plant, as were all of the other catalysts discussed hereinafter. This bench-scale test unit had automatic controls for pressure, flow of reactants, and temperature. The reactor was made from 3/8-inch-(9.5 mm) inside diameter, stainless steel, heavy-walled tubing, A 1/8'' (3 mm)-outside diameter thermowell extended up through the center of the reactor. The reactor was heated by an electrically-heated steel clock. The hydrocarbon feedstock was fed to the unit by means of a Ruska pump, a positive-displacement pump. The 14/20-mesh material was supported on 8/10-mesh alundum particles, i.e., particles that would pass through an 8-mesh screen (Tyler) having openings with a diameter of 2.362 mm, but be retained upon a 10-mesh screen (Tyler), having openings with a diameter of 1.651 mm. Approximately 20 cubic centimeters of the 14/20-mesh catalyst were employed as the catalyst bed in this test, as well as in each of the tests discussed hereinafter. This amount of catalyst provided a length of catalyst bed of 10'' (25 cm) 12'' (30 cm). A layer of 8/10-mesh alundum particles was placed over the catalyst to fill the top part of the reactor. The catalyst was located in the annular space between the thermowell and the internal wall of the 3/8'' (9 mm)-inside diameter reactor.

After Catalyst A was loaded into the reactor, it was subjected to the following sulfiding pretreatment.

5

The temperature of the catalyst bed was raised to 300°F (149°C) and a mixture of 8% hydrogen sulfide in hydrogen was passed through the catalyst bed at a variable pressure. At the end of approximately 1 hour, the temperature was raised to 400°F (204°C) and the hydrogen sulfide-containing gas was passed over or through the catalyst for an additional hour. Then the temperature was raised to 700°F (371°C) and the hydrogen sulfide-hydrogen gas mixture was passed through the catalyst for an additional hour, at which time its flow was stopped. At least one standard cubic foot (28 l) of hydrogen-hydrogen sulfide gas, preferably at least 1 standard cubic foot (28 l) of gas per hour, had been passed through the catalyst bed. Hydrogen gas was then introduced into the reactor and allowed to flow through the catalyst bed at a pressure of 1,800 psi (12,402 kPa) at a flow rate of 15 liters per hour. The Ruska pump was started, hydrocarbon feed was permitted to flow through the reactor, and the temperature of the catalyst bed was raised to the appropriate reaction temperature. Effluent from the reaction zone was passed into a gas-liquid high-pressure separator, wherein the gas was separated from the liquid. The gas was passed through a pressure control valve and a wet test meter to an appropriate vent. The liquid product was passed through a pressure control valve to a liquid product receiver.

Catalyst A was tested at a liquid feed rate of 10.3 cubic centimeters per hour, i.e., a LHSV of 0.5 volume of hydrocarbon per hour per volume of catalyst, and a catalyst bed temperature of approximately 780°F (416°C).

The feedstock that was employed in this test, as well as in the tests of the other examples, was a whole shale oil that had been obtained by in situ retorting of oil shale by the Occidental Petroleum Corporation. The properties of the feed, hereinafter identified as Feed A, are presented hereinbelow in Table I.

**0 050 912**

TABLE I
Feed properties

| | |
|---|---|
| Gravity, °API* | 23.8 |
| Carbon, wt% | 84.87 |
| Hydrogen, wt% | 11.84 |
| Nitrogen, wt% | 1.32 |
| Sulfur, wt% | 0.64 |
| Oxygen, wt% | 1.33 |
| Pour point °F | 60 |
| °C | 16 |
| Viscosity cst (40°C) | 32.9 |
| (100°C) | 5.10 |
| Ramsbottom carbon, wt% | 1.22 |
| ASTM Distillation, °F (°C) IBP | 290 (143) |
| 5% | 404 (207) |
| 30% | 566 (297) |
| 60% | 744 (396) |
| % at 1,000°F (538°C) | 87.2 |
| IBP—360°F (182°C), wt% | 1.5 |
| 360°F (182°C)—650°F (343°C), wt% | 45.8 |
| 650°F+ (343°C+), wt% | 52.7 |
| Fe, ppm (parts per million) | 41 |
| Ni | 10 |
| V | about 1 |
| As | 26 |
| Na | about 12 |
| Mo | 3 |

The results of this test, Test No. 1, are presented hereinafter in Table II.

*Degrees API (°API) are determined by hydrometer measurement, connected to 60°F (15.6°C) on a scale related to specific gravity $S$ at 60°/60°F (15.6/15.6°C) as follows:

$$°API = \frac{141.5}{S} - 131.5$$

(see Perry and Chilton, Chemical Engineers' hand book, 5th edition, McGraw-Hill Kojakusha Ltd, International Student Edition, 9—10).

# 0 050 912

TABLE II
Data for test No. 1, catalyst A

| Period No. | 1 | 2 | 3 | 4 | 5 | 6 |
|---|---|---|---|---|---|---|
| Hours on Stream | 19 | 43 | 67 | 91 | 115 | 139 |
| Temperature, °F | 780 | — | 780 | 780 | 780 | 780 |
| °C | 416 | — | 416 | 416 | 416 | 416 |
| Pressure, psig | 1,800 | 1,800 | 1,800 | 1,800 | 1,800 | 1,800 |
| kPa | 12,402 | 12,402 | 12,402 | 12,402 | 12,402 | 12,402 |
| LHSV, hr$^{-1}$ | 0.5 | 0.5 | 0.5 | 0.5 | 0.5 | 0.5 |
| Gravity, °API | 36.1 | 36.1 | 36.5 | 36.1 | 36.2 | 36.3 |
| Carbon, wt% | — | — | — | — | 86.40 | — |
| Hydrogen, wt% | — | — | — | — | 13.25 | — |
| Nitrogen, ppm (parts per million) | 2,530 | 2,790 | 2,800 | 3,260 | 3,330 | 3,000 |
| Sulfur, ppm | 259 | 220 | 217 | 217 | 150 | 121 |
| Pour point, °F | — | — | — | — | 80 | — |
| °C | — | — | — | — | 27 | — |
| Viscosity, cst (40°C) | — | — | — | — | 4.80 | — |
| IBP, °F | — | — | — | — | 192 | — |
| °C | — | — | — | — | 89 | — |
| IBP—360°F (182°C), wt% | — | — | — | — | 9.7 | — |
| 360°F (182°C)—650°F (343°C), wt% | — | — | — | — | 57.8 | — |
| 650°F+ (343°C+), wt% | — | — | — | — | 32.5 | — |
| FBP, °F | — | — | — | — | 945 | — |
| °C | — | — | — | — | 507 | — |
| Gas rate, SCFB×10$^3$ | — | — | — | — | 12.9 | — |
| Hydrogen consumption, m$^3$/m$^3$ (SCFB) | — | — | — | — | 179.5 (1,000) | — |
| Wt% recovered | — | — | — | — | 102 | — |
| Wt% C$_1$—C$_4$ on Feed | — | — | — | — | 2.5 | — |

Example II

A second catalyst, identified hereinafter as Catalyst B, was prepared to contain 1.5 wt% CoO, 10 wt% Cr$_2$O$_3$, and 10 wt% MoO$_3$ on a support alumina.

A 617-gram portion of Aero 100A alumina 1/16-inch (0.159-cm) extrudates obtained from the American Cyanamid Company and calcined in air at 1,000°F (538°C) for at least 1 hour was impregnated with a solution that had been prepared by dissolving 132.8 grams of (NH$_4$)$_2$Cr$_2$O$_7$ and 98.12 grams of (NH$_4$)$_6$Mo$_7$O$_{24}$ · 4H$_2$O in 300 milliliters of distilled water. In making up the solution, it was stirred for approximately one-half hour and distilled water was added to make 600 cubic centimeters of solution.

8

Since not all of the solids had been dissolved, approximately 50 cubic centimeters of dilute ammonium hydroxide were added, the solution was filtered, and sufficient water was added to bring the total amount of solution up to 700 cubic centimeters. The addition of the solution to the 617 grams of alumina resulted in a slurry. The excess solution became a cloudy orange upon standing. The mixture was shaken occasionally and was left standing overnight (approximately 16 hours). Since the mixture still contained liquid, it was dried under a heat lamp with stirring. It was then left standing at room temperature over the weekend (approximately 64 hours). The material was then dried in air overnight at a temperature of 212°F (100°C). It was screened to remove alumina chips and powder. Subsequently it was calcined in air at a temperature of 1,000°F (538°C) for one hour.

A 193-gram portion of the calcined material was impregnated with a solution that had been prepared by dissolving 11.65 grams of $Co(NO_3)_2 \cdot 6H_2O$ in 130 cubic centimeters of distilled water. The solution was added slowly to the solid material to provide only a very slight excess of free solution. The material was then dried under a heat lamp with occasional stirring for approximately 1 hour, dried in an oven in air at a temperature of 212°F (100°C) for 20 hours, and calcined in air at a temperature of 1,000°F (538°C) for 1 hour. The calcined material, Catalyst B, was ground and screened to a 14/20-mesh material, i.e., a material that would pass through a 14-mesh screen (Tyler) having openings with a diameter of 1.168 mm, but be retained upon a 20-mesh screen (Tyler), having openings with a diameter of 0.833 mm.

A 20-cubic centimeter sample of catalyst B was charged to the reactor of a bench-scale test unit, pretreated, and tested with Feed A, as described in Example I hereinabove. The results of this test, Test No. 2, are presented hereinbelow in Table III.

A comparison of the results obtained in Test No. 1 to those in Test No. 2 shows that the alumina-supported catalyst was somewhat better than the silica-supported catalyst for nitrogen removal.

# 0 050 912

TABLE III
Data for test No. 2, catalyst B

| Period No. | 1 | 2 | 3 | 4 | 5A | 6 |
|---|---|---|---|---|---|---|
| Hours on Stream | 41 | 65 | 89 | 113 | 137 | 161 |
| Temperature, °F | 780 | — | 779 | 780 | 780 | 780 |
| °C | 416 | — | 415 | 416 | 416 | 416 |
| Pressure, psig | 1,800 | 1,800 | 1,800 | 1,800 | 1,800 | 1,800 |
| kPa | 12,402 | 12,402 | 12,402 | 12,402 | 12,402 | 12,402 |
| LHSV, hr$^{-1}$ | 0.5 | 0.5 | 0.5 | 0.5 | 0.5 | 0.5 |
| Gravity, °API | 39.0 | 38.7 | 39.0 | 38.6 | 38.6 | 38.5 |
| Carbon, wt% | — | — | — | — | 86.33 | — |
| Hydrogen, wt% | — | — | — | — | 13.64 | — |
| Nitrogen, ppm | 99 | 144 | 155 | 153 | 161 | 143 |
| Sulfur, ppm | 430 | 96 | 147 | 378 | 112 | 211 |
| Pour Point, °F | — | — | — | — | 75 | — |
| °C | — | — | — | — | 24 | — |
| Viscosity, cst (40°C) | — | — | — | — | 3.46 | — |
| IBP, °F | — | — | — | — | 123 | — |
| °C | — | — | — | — | 51 | — |
| IBP—360°F (182°C), wt% | — | — | — | — | 14.1 | — |
| 360°F (182°C)—650°F (343°C), wt% | — | — | — | — | 61.4 | — |
| 650°F+ (343°C+), wt% | — | — | — | — | 24.5 | — |
| FBP, °F | — | — | — | — | 929 | — |
| °C | — | — | — | — | 498 | — |
| Gas rate, m$^3$/m$^3$ (SCFB) ×10$^3$ | — | — | — | — | 1.885 (10.5) | |
| Hydrogen consumption, m$^3$/m$^3$ (SCFB) | — | — | — | — | 227.6 (1,268) | — |
| Wt% recovered | — | — | — | — | 98.8 | — |
| Wt% C$_1$—C$_4$ on Feed | — | — | — | — | 2.60 | — |

Example III

A third catalyst, identified hereinafter as Catalyst C, was prepared to contain 1.5 wt% CoO, 10 wt% Cr$_2$O$_3$, and 15 wt% MoO$_3$ on alumina.

A 147-gram quantity of Aero 100A alumina, obtained from American Cyanamid Company, in the form of 1/16-inch (0.159 cm) extrudates was impregnated with a solution that had been prepared by dissolving 33.2 grams of (NH$_4$)$_2$Cr$_2$O$_7$ in 145 milliliters of distilled water. The alumina extrudates had been calcined in air at a temperature of 1,000°F (538°C) for at least 1 hour prior to the impregnation. The solution and extrudates were thoroughly mixed. Upon standing for a period of time, the mixture was heated overnight

10

0 050 912

(about 16 hours) in a vacuum oven at a temperature of about 212°F (100°C). Then the dried material was calcined in air at a temperature of 1,000°F (538°C) for 3 hours.

The calcined material was impregnated with a solution that had been prepared by dissolving 11.65 grams of $Co(NO_3)_2 \cdot 6H_2O$ and 36.8 grams of $(NH_4)_6Mo_7O_{24} \cdot 4H_2O$ in sufficient distilled water to make 120 milliliters of solution. The mixture of solution and calcined solid was allowed to stand for 1 hour, dried in a vacuum oven for 2 hours at a temperature of 212°F (100°C), and calcined at a temperature of 1,000°F (538°C) overnight (approximately 16 hours).

The resulting calcined catalyst, Catalyst C, was ground and screened to a 14/20-mesh material, i.e. particles with diameters between 0.833 mm and 1.168 mm.

A 20-cubic centimeter sample of Catalyst C was charged to the reactor of a bench-scale test unit, pretreated, and tested with Feed A, as described in Example I hereinabove. The results of this test, Test No. 3, are presented hereinbelow in Table IV.

A comparison of the results obtained in Test No. 2 to those in Test No. 3 shows that the catalyst containing the 15 wt% $MoO_3$ was slightly better for nitrogen removal.

TABLE IV
Data for test No. 3, catalyst C

| Period No. | 1 | 2 | 3 | 4 |
|---|---|---|---|---|
| Hours on Stream | 19 | 43 | 67 | 91 |
| Temperature, °F | 779 | — | — | 780 |
| °C | 415 | — | — | 416 |
| Pressure, psig | 1,800 | 1,800 | 1,800 | 1,800 |
| kPa | 12,402 | 12,402 | 12,402 | 12,402 |
| LHSV, hr$^{-1}$ | 0.5 | 0.5 | 0.5 | 0.5 |
| Gravity, °API | 39.9 | 39.0 | 39.1 | 39.1 |
| Carbon, wt% | — | — | — | — |
| Hydrogen, wt% | — | — | — | — |
| Nitrogen, ppm | 78 | 82 | 83 | 88 |
| Sulfur, ppm | 358 | 120 | 293 | 122 |
| Pour Point, °F | — | — | — | — |
| °C | — | — | — | — |
| Viscosity, cst (40°C) | — | — | — | — |
| IBP, °F | — | — | — | — |
| °C | — | — | — | — |
| IBP—360°F (182°C), wt% | — | — | — | — |
| 360°F (182°C)—650°F (343°C), wt% | — | — | — | — |
| 650°F+ (343°C+), wt% | — | — | — | — |
| FBP, °F | — | — | — | — |
| Gas rate, m³/m³ (SCFB) ×10³ | — | — | — | — |
| Hydrogen consumption, m³/m³ (SCFB) | — | — | — | — |
| Wt% recovered | — | — | — | — |
| Wt% $C_1$—$C_4$ on Feed | — | — | — | — |

11

## 0 050 912

TABLE IV (Contd.)
Data for test No. 3, catalyst C

| Period No. | 5 | 6 | 7 |
|---|---|---|---|
| Hours on Stream | 115 | 139 | 163 |
| Temperature, °F | 780 | 780 | 780 |
| °C | 416 | 416 | 416 |
| Pressure, psig | 1,800 | 1,800 | 1,800 |
| kPa | 12,402 | 12,402 | 12,402 |
| LHSV, $hr^{-1}$ | 0.5 | 0.5 | 0.5 |
| Gravity, °API | 39.0 | 39.2 | 39.2 |
| Carbon, wt% | — | — | 86.32 |
| Hydrogen, wt% | — | — | 13.65 |
| Nitrogen, ppm | 82 | 116 | 110 |
| Sulfur, ppm | 183 | — | 117 |
| Pour Point, °F | — | — | 80 |
| °C | — | — | 26 |
| Viscosity, cst (40°C) | — | — | 3.24 |
| IBP, °F | — | — | 5 |
| °C | — | — | −15 |
| IBP—360°F (182°C), wt% | — | — | 15.1 |
| 360°F (182°C)—650°F (343°C), wt% | — | — | 60.9 |
| 650°F+ (343°C+), wt% | — | — | 24.0 |
| FBP, °F | — | — | 915 |
| °C | — | — | 491 |
| Gas rate, $m^3/m^3$ (SCFB) $\times 10^3$ | — | — | 1.795 (10.0) |
| Hydrogen consumption, $m^3/m^3$ (SCFB) | — | — | 229.76 (1,280) |
| Wt% recovered | — | — | 103.2 |
| Wt% $C_1$—$C_4$ on Feed | — | — | 2.90 |

Example IV

A fourth catalyst, identified hereinafter as Catalyst D, was prepared to contain 1.5 wt% CoO, 10 wt% $Cr_2O_3$, and 15 wt% $MoO_3$ on a support of 20 wt% silica and 80 wt% alumina.

A catalytic alumina-silica support material obtained from the Nalco Chemical Company and containing 20 wt% silica was ground and screened to a 14/20-mesh material i.e. particles with diameters between 0.833 mm and 1.168 mm and calcined in air overnight (approximately 16 hours) at a temperature of 1,000°F (538°C).

12

**0 050 912**

A 25-gram portion of this calcined support material was impregnated with a solution that had been prepared by dissolving 5.63 grams of $(NH_4)_2Cr_2O_7$ in 25 milliliters of distilled water. The mixture was allowed to stand for 6 hours and calcined in air at a temperature of 1,000°F (538°C) over the weekend (approximately 64 hours).

The calcined material was impregnated with a solution that had been prepared by dissolving 1.98 grams of $Co(No_3)_2 \cdot 6H_2O$ and 6.23 grams of $(NH_4)_6Mo_7O_{24} \cdot 4H_2O$ in 25 milliliters of distilled water. After thoroughly mixing, the mixture was permitted to stand for 6 hours and then calcined in air at 1,000°F (538°C) overnight (approximately 16 hours).

A 20-cubic centimeter of the resulting calcined material, Catalyst D, was charged to the reactor of a bench-scale test unit, pretreated, and tested with Feed A, as described hereinabove in Example I. The results of this test, Test No. 4, are presented hereinbelow in Table V.

A comparison of the four experimental catalysts discussed hereinabove clearly demonstrates that the catalyst having a support of 20 wt% silica and 80 wt% alumina is far superior to a catalyst having either a silica support or an alumina support, when each is used for the hydrodenitrogenation of a nitrogen-containing feedstock.

# 0 050 912

TABLE V
Data for test No. 4, catalyst D

| Period No. | 1 | 2 | 3 | 4 |
|---|---|---|---|---|
| Hours on Stream | 22 | 46 | 70 | 94 |
| Temperature, °F | 781 | 780 | — | — |
| °C | 417 | 416 | — | — |
| Pressure, psig | 1,800 | 1,800 | 1,800 | 1,800 |
| kPa | 12,402 | 12,402 | 12,402 | 12,402 |
| LHSV, hr$^{-1}$ | 0.5 | 0.5 | 0.5 | 0.5 |
| Gravity, °API | 39.9 | 40.0 | 39.8 | 39.7 |
| Carbon, wt% | — | 86.19 | — | — |
| Hydrogen, wt% | — | 13.80 | — | — |
| Nitrogen, ppm | 2 | 8 | 9 | 8 |
| Sulfur, ppm | 247 | 103 | 196 | 315 |
| Pour Point, °F | — | 70 | — | — |
| °C | — | 21 | — | — |
| Viscosity, cst (40°C) | — | 2.92 | — | — |
| IBP, °F | — | 36 | — | — |
| °C | — | 2 | — | — |
| IBP—360°F (182°C), wt% | — | 19.7 | — | — |
| 360°F (182°C)—650°F (343°C), wt% | — | 60.4 | — | — |
| 650°F+ (343°C+), wt% | — | 19.9 | — | — |
| FBP, °F | — | 950 | — | — |
| °C | — | 510 | — | — |
| Gas rate, m$^3$/m$^3$ (SCFB) ×10$^3$ | — | 2.172 (12.1) | — | — |
| Hydrogen consumption, m$^3$/m$^3$ (SCFB) | — | 248.4 (1,384) | — | — |
| Wt% recovered | — | 98 | — | — |
| Wt% $C_1$—$C_4$ on Feed | — | 2.92 | — | — |

14

TABLE V (Contd.)

| Period No. | 5 | 6 | 7 | 8 |
|---|---|---|---|---|
| Hours on Stream | — | — | — | — |
| Temperature, °F | 781 | 781 | — | — |
| °C | 417 | 417 | — | — |
| Pressure, psig | 1,800 | 1,800 | 1,800 | 1,800 |
| kPa | 12,402 | 12,402 | 12,402 | 12,402 |
| LHSV, hr$^{-1}$ | 0.5 | 0.5 | 0.5 | 0.5 |
| Gravity, °API | 39.8 | 39.7 | 39.2 | 39.0 |
| Carbon, wt% | — | 86.35 | — | — |
| Hydrogen, wt% | — | 13.63 | — | — |
| Nitrogen, ppm | 7 | 8 | 14 | 8 |
| Sulfur, ppm | 54 | 165 | 150 | 281 |
| Pour Point, °F | — | 65 | — | — |
| °C | — | 18 | — | — |
| Viscosity, cst (40°C) | — | 3.0 | — | — |
| IBP, °F | — | 73 | — | — |
| °C | — | 23 | — | — |
| IBP—360°F (182°C), wt% | — | 14.9 | — | — |
| 360°F (182°C)—650°F (343°C), wt% | — | 51.5 | — | — |
| 650°F+ (343°C+), wt% | — | 23.5 | — | — |
| FBP, °F | — | 902 | — | — |
| °C | — | 483 | — | — |
| Gas rate, m³/m³ (SCFB) ×10³ | — | 2.12 (11.8) | — | — |
| Hydrogen consumption, m³/m³ (SCFB) | — | 229.4 (1,278) | — | — |
| Wt% recovered | — | 96 | — | — |
| Wt% C$_1$—C$_4$ on Feed | — | 3.02 | — | — |

Example V

A fifth catalyst, identified hereinafter as Catalyst E, was prepared to contain 1.5 wt% CoO, 10 wt% $Cr_2O_3$, and 15 wt% $MoO_3$ on a support of 30 wt% silica and 70 wt% alumina.

A catalytic alumina-silica supported material obtained from the Nalco Chemical Company and containing 30 wt% silica was calcined in air at 1,000°F (538°C) for at least 1 hour.

A 147-gram quantity of the calcined support material as 5/64-inch (0.794-cm) extrudates was impregnated with a solution that had been prepared by dissolving 33.2 grams of $(NH_4)_2Cr_2O_7$ in 145 milliliters of distilled water. The resulting composite was allowed to stand for 6 hours and then calcined in air at a temperature of 1,000°F (538°C) over the weekend (approximately 64 hours).

The resulting calcined material was impregnated with a solution that had been prepared by dissolving

**0 050 912**

11.65 grams of $Co(NO_3)_2 \cdot 6H_2O$ and 41.71 grams of $(NH_4)_6Mo_7O_{24} \cdot 4H_2O$ in 140 milliliters of distilled water. The impregnated composite was allowed to stand for 6 hours and was then calcined in air at a temperature of 1,000°F (538°C) overnight (approximately 16 hours). The resulting catalyst, Catalyst E, was ground and screened to a 14/20-mesh material, i.e. particles with diameters between 0.833 mm and 1.168 mm.

A 20-cubic centimeter portion of Catalyst E was charged to the reactor of a bench-scale test unit, pretreated, and tested with Feed A, as described hereinabove in Example I. The results of this test, Test No. 5, are presented hereinbelow in Table VI.

TABLE VI
Data for test No. 5, catalyst E

| Period No. | 1 | 2 | 3 | 4 |
|---|---|---|---|---|
| Hours on Stream | 21 | 45 | 69 | 93 |
| Temperature, °F | 781 | 780 | — | — |
| °C | 417 | 416 | — | — |
| Pressure, psig | 1,800 | 1,800 | 1,800 | 1,800 |
| kPa | 12,402 | 12,402 | 12,402 | 12,402 |
| LHSV, hr$^{-1}$ | 0.5 | 0.5 | 0.5 | 0.5 |
| Gravity, °API | 40.5 | 39.6 | 39.4 | 39.4 |
| Carbon, wt% | — | — | — | — |
| Hydrogen, wt% | — | — | — | — |
| Nitrogen, ppm | 67 | 42 | 26 | 33 |
| Sulfur, ppm | 460 | 199 | 168 | 172 |
| Pour Point, °F | — | — | — | — |
| °C | — | — | — | — |
| Viscosity, cst (40°C) | — | — | — | — |
| IBP, °F | — | — | — | — |
| °C | — | — | — | — |
| IBP—360°F (182°C), wt% | — | — | — | — |
| 360°F (182°C)—650°F (343°C), wt% | — | — | — | — |
| 650°F+ (343°C+), wt% | — | — | — | — |
| FBP, °F | — | — | — | — |
| °C | — | — | — | — |
| Gas rate, m³/m³ (SCFB) ×10³ | — | — | — | — |
| Hydrogen consumption, m³/m³ (SCFB) | — | — | — | — |
| Wt% recovered | — | — | — | — |
| Wt% C$_1$—C$_4$ on Feed | — | — | — | — |

16

# 0 050 912

## TABLE VI (Contd.)

| Period No. | 5 | 6 | 7 |
|---|---|---|---|
| Hours on Stream | 117 | 141 | 165 |
| Temperature, °F | 780 | 780 | 781 |
| °C | 416 | 416 | 417 |
| Pressure, psig | 1,800 | 1,800 | 1,800 |
| kPa | 12,402 | 12,402 | 12,402 |
| LHSV, hr$^{-1}$ | 0.5 | 0.5 | 0.5 |
| Gravity, °API | 39.4 | 39.8 | 39.4 |
| Carbon, wt% | — | 86.30 | — |
| Hydrogen, wt% | — | 13.68 | — |
| Nitrogen, ppm | 18 | 58 | 8 |
| Sulfur, ppm | 128 | 56 | 59 |
| Pour Point, °F | — | 65 | — |
| °C | — | 18 | — |
| Viscosity, cst (40°C) | — | 3.03 | — |
| IBP, °F | — | 125 | — |
| °C | — | 52 | — |
| IBP—360°F (182°C), wt% | — | 12.9 | — |
| 360°F (182°C)—650°F (343°C), wt% | — | 59.3 | — |
| 650°F+ (343°C+), wt% | — | 28.8 | — |
| FBP, °F | — | 1,000+ | — |
| °C | — | 538+ | — |
| Gas rate m³/m³ (SCFB)×10³ | — | 2.495 (13.9) | — |
| Hydrogen consumption, m³/m³ (SCFB) | — | 218.3 (1,216) | — |
| Wt% recovered | — | 99.0 | — |
| Wt% $C_1$—$C_4$ on Feed | — | 3.28 | — |

Example VI

A sixth catalyst, identified hereinafter as Catalyst F, was prepared to contain 1.5 wt% CoO, 10 wt% $Cr_2O_3$, and 15 wt% $MoO_3$ on a support of 50 wt% silica and 50 wt% alumina.

The catalyst support for Catalyst F was prepared by adding 691 grams of an Aero 1,000 PHF-alumina sol (69.1 grams of alumina) obtained from the American Cyanamid Company to 3,000 grams of a sol containing 113.18 grams of silica (72 wt%) and 44.02 grams of alumina (28 wt%) and obtained from the American Cyanamid Company. The resulting mixture was blended in a blender and 400 cubic centimeters of a solution prepared from equal parts of distilled water and concentrated ammonium hydroxide (28—30% $NH_4OH$) were added to the blend, and blending continued until a thin paste formed.

Three batches were made and combined. A liter of solution prepared from equal parts of distilled water

17

and concentrated ammonium hydroxide was added to the composite, which then was left standing for 24 hours. Subsequently, the material was dried in an oven in air at a temperature of 250°F (121°C) for several days until dry and ground and screened to pass through a 100-mesh screen (Tyler) having openings with a diameter of 0.147 mm. The ground material was mulled with distilled water, a small amount of PHF-alumina was added thereto, and the resulting composition was extruded to 5/64-inch (0.794-cm) extrudates. The extrudates were dried overnight (approximately 16 hours) in air at a temperature of 250°F (121°C) and calcined in air for 4 hours at a temperature of 1,000°F (538°C).

A 147-gram portion of the calcined support material was impregnated with a solution that had been prepared by dissolving 33.2 grams of $(NH_4)_2Cr_2O_7$ in 140 milliliters of distilled water. The resulting composite was allowed to stand for 1 hour and dried under a heat lamp. The dried material was impregnated with a solution that had been prepared by dissolving 36.8 grams of $(NH_4)_6Mo_7O_{24} \cdot 4H_2O$ followed by 11.65 grams of $Co(NO_3)_2 \cdot 6H_2O$ in distilled water and adding sufficient distilled water to make 130 cubic centimeters of solution. After standing for 1 hour, the mixture was dried under a heat lamp and calcined in air for 1 hour at a temperature of 1,000°F (538°C).

A 20-cubic centimeter sample of this catalyst Catalyst F, was charged, as 14/20-mesh material i.e. particles with diameters between 0.833 mm and 1.168 mm, to the reactor of a bench-scale test unit, pretreated, and tested with Feed A, as described hereinabove in Example I. The results of this test, Test No. 6, are presented hereinbelow in Table VII.

# 0 050 912

TABLE VII
Data for test No. 6, catalyst F

| Period No. | 1 | 2 | 3 | 4 |
|---|---|---|---|---|
| Hours on Stream | 23 | 47 | 71 | 95 |
| Temperature, °F | 781 | 782 | 781 | — |
| °C | 417 | 417 | 417 | — |
| Pressure, psig | 1,800 | 1,800 | 1,800 | 1,800 |
| kPa | 12,402 | 12,402 | 12,402 | 12,402 |
| LHSV, hr$^{-1}$ | 0.5 | 0.5 | 0.5 | 0.5 |
| Gravity, °API | 40.3 | 39.6 | 38.5 | 38.7 |
| Carbon, wt% | — | — | — | — |
| Hydrogen, wt% | — | — | — | — |
| Nitrogen, ppm | 166 | 323 | 109 | 25 |
| Sulfur, ppm | 650 | 540 | 150 | 219 |
| Pour Point, °F | — | — | — | — |
| °C | — | — | — | — |
| Viscosity, cst (40°C) | — | — | — | — |
| IBP, °F | — | — | — | — |
| °C | — | — | — | — |
| IBP—360°F (182°C), wt% | — | — | — | — |
| 360°F (182°C)—650°F (343°C), wt% | — | — | — | — |
| 650°F+ (343°C+), wt% | — | — | — | — |
| FBP, °F | — | — | — | — |
| °C | — | — | — | — |
| Gas rate, m$^3$/m$^3$ (SCFB) ×10$^3$ | — | — | — | — |
| Hydrogen consumption, m$^3$/m$^3$ (SCFB) | — | — | — | — |
| Wt% recovered | — | — | — | — |
| Wt% C$_1$—C$_4$ on Feed | — | — | — | — |

TABLE VII (Contd.)

| Period No. | 5 | 6 | 7 | 8 |
|---|---|---|---|---|
| Hours on Stream | 119 | 143 | 167 | 191 |
| Temperature, °F | — | 780 | 780 | 780 |
| °C | — | 416 | 416 | 416 |
| Pressure, psig | 1,800 | 1,800 | 1,800 | 1,800 |
| kPa | 12,402 | 12,402 | 12,402 | 12,402 |
| LHSV, hr$^{-1}$ | 0.5 | 0.5 | 0.5 | 0.5 |
| Gravity, °API | 39.0 | 38.7 | 39.0 | 37.9 |
| Carbon, wt% | — | — | 86.4 | — |
| Hydrogen, wt% | — | — | 13.6 | — |
| Nitrogen, ppm | 16 | 18 | 20 | 37 |
| Sulfur, ppm | 257 | 67 | 70 | 236 |
| Pour Point, °F | — | — | 75 | — |
| °C | — | — | 24 | — |
| Viscosity, cst (40°C) | — | — | 3.4 | — |
| IBP, °F | — | — | 104 | — |
| °C | — | — | 41 | — |
| IBP—360°F (182°C), wt% | — | — | 13.9 | — |
| 360°F (182°C)—650°F (343°C), wt% | — | — | 58.3 | — |
| 650°F+ (343°C+), wt% | — | — | 27.8 | — |
| FBP, °F | — | — | 971 | — |
| °C | — | — | 522 | — |
| Gas rate, m³/m³ (SCFB)×10³ | — | — | 3.25 (18.1) | — |
| Hydrogen consumption, m³/m³ (SCFB) | — | — | 224.5 (1,251) | — |
| Wt% recovered | — | — | 99.3 | — |
| Wt% C$_1$—C$_4$ on Feed | — | — | 3.0 | — |

TABLE VII (Contd.)

| Period No. | 9 | 10 | 11 | 12 |
|---|---|---|---|---|
| Hours on Stream | 215 | 239 | 263 | 287 |
| Temperature, °F | 780 | 780 | — | — |
| °C | 416 | 416 | — | — |
| Pressure, psig | 1,800 | 1,800 | 1,800 | 1,800 |
| kPa | 12,402 | 12,402 | 12,402 | 12,402 |
| LHSV, hr$^{-1}$ | 0.5 | 0.5 | 0.5 | 0.5 |
| Gravity, °API | 37.6 | 37.7 | 37.8 | 37.8 |
| Carbon, wt% | — | — | — | — |
| Hydrogen, wt% | — | — | — | — |
| Nitrogen, ppm | 38 | 31 | 29 | 42 |
| Sulfur, ppm | 164 | 208 | 246 | 160 |
| Pour Point, °F | — | — | — | — |
| °C | — | — | — | — |
| Viscosity, cst (40°C) | — | — | — | — |
| IBP, °F | — | — | — | — |
| °C | — | — | — | — |
| IBP—360°F (182°C), wt% | — | — | — | — |
| 360°F (182°C)—650°F (343°C), wt% | — | — | — | — |
| 650°F+ (343°C+), wt% | — | — | — | — |
| FBP, °F | — | — | — | — |
| °C | — | — | — | — |
| Gas rate, m$^3$/m$^3$ (SCFB) ×10$^3$ | — | — | — | — |
| Hydrogen consumption, m$^3$/m$^3$ (SCFB) | — | — | — | — |
| Wt% recovered | — | — | — | — |
| Wt% C$_1$—C$_4$ on Feed | — | — | — | — |

**0 050 912**

TABLE VII (Contd.)

| Period No. | 13 | 14 |
|---|---|---|
| Hours on Stream | 311 | 335 |
| Temperature, °F | 780 | 778 |
| °C | — | 415 |
| Pressure, psig | 1,800 | 1,800 |
| kPa | 12,402 | 12,402 |
| LHSV, $hr^{-1}$ | 0.5 | 0.5 |
| Gravity, °API | 37.7 | 38.5 |
| Carbon, wt% | — | 86.3 |
| Hydrogen, wt% | — | 13.6 |
| Nitrogen, ppm | 38 | — |
| Sulfur, ppm | 213 | 345 |
| Pour Point, °F | — | — |
| °C | — | — |
| Viscosity, cst (40°C) | — | — |
| IBP, °F | — | 96 |
| °C | — | 36 |
| IBP—360°F (182°C), wt% | — | 13.0 |
| 360°F (182°C)—650°F (343°C), wt% | — | 59.2 |
| 650°F+ (343°C+), wt% | — | 27.8 |
| FBP, °F | — | 924 |
| °C | — | 495 |
| Gas rate, $m^3/m^3$ (SCFB) $\times 10^3$ | — | 2.656 (14.8) |
| Hydrogen consumption, $m^3/m^3$ (SCFB) | — | 216.5 (1,206) |
| Wt% recovered | — | 101 |
| Wt% $C_1$—$C_4$ on Feed | — | 1.3 |

22

# 0 050 912

Example VII

A seventh catalyst, identified hereinafter as Catalyst G, was prepared to contain 1.5 wt% CoO, 10 wt% $Cr_2O_3$, and 15 wt% $MoO_3$ on a support of 10 wt% silica and 90 wt% alumina.

The support was prepared by mixing 3,015 grams of an Aero 1000 PHF-alumina sol (301 grams of alumina) obtained from the American Cyanamid Company with 922 grams of an alumina-silica sol (35 grams of silica and 13.5 grams of alumina) obtained from the American Cyanamid Company in a blender. To this mixture were added 400 cubic centimeters of a solution that had been prepared from equal parts of distilled water and concentrated ammonium hydroxide. The mixture was blended.

Two batches were made and combined. To this composite were added 1.5 liters of a solution that had been prepared from equal parts of distilled water and concentrated ammonium hydroxide. The resulting mixture was allowed to stand for 24 hours and then dried at a temperature of 250°F (121°C) for several days until dry. The dried material was ground and screened to 100-mesh material i.e. particles with a diameter of 0.147 mm. It was then mulled with distilled water. Since too much water had been added, a small amount of Catapal SB alumina was added thereto. The material was then extruded to 5/64-inch extrudates, dried in air overnight (approximately 16 hours) at a temperature of 250°F (121°C), and calcined in air for 4 hours at a temperature of 1,000°F (538°C).

The support material was impregnated in the same manner as described for Catalyst F in Example VI hereinabove.

A 2-cubic centimeter sample of Catalyst G was charged, as 14/20-mesh material i.e. particles having diameters between 0.833 mm and 1.168 mm, to the reactor of a bench-scale test unit, pretreated, and tested with Feed A, as described hereinabove in Example I. The results of this test, Test No. 7, are presented hereinbelow in Table VIII.

23

# 0 050 912

TABLE VIII
Data for test No. 7, catalyst G

| Period No. | 1 | 2 | 3 | 4 | 5 |
|---|---|---|---|---|---|
| Hours on Stream | 18 | 42 | 66 | 90 | 114 |
| Temperature, °F | 780 | 781 | — | — | — |
| °C | 416 | 417 | — | — | — |
| Pressure, psig | 1,800 | 1,800 | 1,800 | 1,800 | 1,800 |
| kPa | 12,402 | 12,402 | 12,402 | 12,402 | 12,402 |
| LHSV, hr$^{-1}$ | 0.5 | 0.5 | 0.5 | 0.5 | 0.5 |
| Gravity, °API | 40.4 | 38.5 | 38.6 | 38.5 | 38.4 |
| Carbon, wt% | — | — | — | — | — |
| Hydrogen, wt% | — | — | — | — | — |
| Nitrogen, ppm | 100 | 260 | 140 | 100 | 100 |
| Sulfur, ppm | 530 | 372 | 324 | 232 | 353 |
| Pour Point, °F | — | — | — | — | — |
| °C | — | — | — | — | — |
| Viscosity, cst (40°C) | — | — | — | — | — |
| IBP, °F | — | — | — | — | — |
| °C | — | — | — | — | — |
| IBP—360°F (182°C), wt% | — | — | — | — | — |
| 360°F (182°C)—650°F (343°C), wt% | — | — | — | — | — |
| 650°F+ (343°C+), wt% | — | — | — | — | — |
| FBP, °F | — | — | — | — | — |
| °C | — | — | — | — | — |
| Gas rate, m$^3$/m$^3$ (SCFB) ×10$^3$ | — | — | — | — | — |
| Hydrogen consumption, m$^3$/m$^3$ (SCFB) | — | — | — | — | — |
| Wt% recovered | — | — | — | — | — |
| Wt% $C_1$—$C_4$ on Feed | — | — | — | — | — |

24

**0 050 912**

TABLE VIII (Contd.)

| Period No. | 6 | 7 | 8 | 9 | 10 |
|---|---|---|---|---|---|
| Hours on Stream | 138 | 162 | 186 | 210 | 234 |
| Temperature, °F | — | — | — | — | — |
| °C | — | — | — | — | — |
| Pressure, psig | 1,800 | 1,800 | 1,800 | 1,800 | 1,800 |
| kPa | 12,402 | 12,402 | 12,402 | 12,402 | 12,402 |
| LHSV, $hr^{-1}$ | 0.5 | 0.5 | 0.5 | 0.5 | 0.5 |
| Gravity, °API | 37.8 | 38.0 | 38.5 | 38.0 | 37.2 |
| Carbon, wt% | — | 86.3 | — | — | — |
| Hydrogen, wt% | — | 13.7 | — | — | — |
| Nitrogen, ppm | 820 | 320 | 90 | 250 | — |
| Sulfur, ppm | 460 | 153 | 180 | 500 | 980 |
| Pour Point, °F | — | 75 | — | — | 30 |
| °C | — | 24 | — | — | −1 |
| Viscosity, cst (40°C) | — | 3.47 | — | — | 3.87 |
| IBP, °F | — | 100 | — | — | 106 |
| °C | — | 38 | — | — | 41 |
| IBP—360°F (182°C), wt% | — | 16.2 | — | — | 12.4 |
| 360°F (182°C)—650°F (343°C), wt% | — | 47.8 | — | — | 57.0 |
| 650°F+ (343°C+), wt% | — | 36.0 | — | — | 30.6 |
| FBP, °F | — | 1,000+ | — | — | 953 |
| °C | — | 538+ | — | — | 512 |
| Gas rate, $m^3/m^3$ (SCFB) $\times 10^3$ | — | 3.2 (17.9) | — | — | — |
| Hydrogen consumption, $m^3/m^3$ (SCFB) | — | 244.2 (1,361−) | — | — | — |
| Wt% recovered | — | 102.3 | — | — | — |
| Wt% $C_1$—$C_4$ on Feed | — | 5.0 | — | — | — |

Example VIII

An eighth catalyst, identified hereinafter as Catalyst H, was prepared to contain 1.5 wt% CoO, 10 wt% $Cr_2O_3$, and 15 wt% $MoO_3$ on a support of 70 wt% silica and 30 wt% alumina.

The support material containing 70 wt% silica and 30 wt% alumina was obtained from W. R. Grace and Co.

A 147-gram portion of this support material as 1/8-inch (0.318-cm) pellets was impregnated with a solution that had been prepared by dissolving 33.2 grams of $(NH_4)_2Cr_2O_7$ in 140 milliliters of distilled water. The resulting composite was allowed to stand for 1 hour and dried under a heat lamp and in an oven overnight (approximately 16 hours) at a temperature of 250°F (121°C). The dried material was then calcined

25

## 0 050 912

in air at a temperature of 1,000°F (538°C) for 4 hours. The calcined material was impregnated with a solution that had been prepared by dissolving 33.2 grams of $(NH_4)_6MO_7O_{24} \cdot 4H_2O$ and 11.68 grams of $CO(NO_3)_2 \cdot 6H_2O$ in distilled water and adding sufficient distilled water to make 125 cubic centimeters of solution. After standing for about 0.5 hour, the composite was dried under a heat lamp for 0.5 hour and then in an oven for 1 hour at a temperature of 250°F (121°C). The dried material was calcined in air overnight (approximately 16 hours) at a temperature of 1,000°F (538°C).

A 20-cubic centimeter sample of Catalyst H was charged, as 14/20-mesh material i.e. particles having diameters between 0.833 mm and 1.168 mm, to the reactor of a bench-scale test unit, pretreated, and tested with Feed A, as described hereinabove in Example I. The results of this test, Test No. 8, are presented hereinbelow in Table IX.

### TABLE IX
Data for test No. 8, catalyst H

| Period No. | 1 | 2 | 3 | 4 | 5 |
|---|---|---|---|---|---|
| Hours on Stream | 19 | 43 | 67 | 91 | 115 |
| Temperature, °F | 779 | — | — | 780 | 780 |
| °C | 415 | — | — | 416 | 416 |
| Pressure, psig | 1,800 | 1,800 | 1,800 | 1,800 | 1,800 |
| kPa | 12,402 | 12,402 | 12,402 | 12,402 | 12,402 |
| LHSV, hr⁻¹ | 0.5 | 0.5 | 0.5 | 0.5 | 0.5 |
| Gravity, °API | 38.1 | 36.4 | 36.6 | 36.8 | 36.4 |
| Carbon, wt% | — | — | — | — | — |
| Hydrogen, wt% | — | — | — | — | — |
| Nitrogen, ppm | 512 | 371 | 504 | 421 | 385 |
| Sulfur, ppm | 970 | 490 | 319 | 320 | 206 |
| Pour Point, °F | — | — | — | — | — |
| °C | — | — | — | — | — |
| Viscosity, cst (40°C) | — | — | — | — | — |
| IBP, °F | — | — | — | — | — |
| °C | — | — | — | — | — |
| IBP—360°F (182°C), wt% | — | — | — | — | — |
| 360°F (182°C)—650°F (343°C), wt% | — | — | — | — | — |
| 650°F+ (343°C+), wt% | — | — | — | — | — |
| FBP, °F | — | — | — | — | — |
| °C | — | — | — | — | — |
| Gas rate, m³/m³ (SCFB) ×10³ | — | — | — | — | — |
| Hydrogen consumption, m³/m³ (SCFB) | — | — | — | — | — |
| Wt% recovered | — | — | — | — | — |
| Wt% C₁—C₄ on Feed | — | — | — | — | — |

26

**0 050 912**

TABLE IX (Contd.)

| Period No. | 6 | 7 | 8 | 9 | 10 |
|---|---|---|---|---|---|
| Hours on Stream | 139 | 163 | 187 | 211 | 235 |
| Temperature, °F | 780 | 780 | 779 | — | — |
| °C | 416 | 416 | 415 | — | — |
| Pressure, psig | 1,800 | 1,800 | 1,800 | 1,800 | 1,800 |
| kPa | 12,402 | 12,402 | 12,402 | 12,402 | 12,402 |
| LHSV, hr$^{-1}$ | 0.5 | 0.5 | 0.5 | 0.5 | 0.5 |
| Gravity, °API | 36.3 | 36.1 | 36.1 | 35.7 | 35.8 |
| Carbon, wt% | — | — | — | — | — |
| Hydrogen, wt% | — | — | — | — | — |
| Nitrogen, ppm | 435 | 719 | 637 | 637 | 697 |
| Sulfur, ppm | 170 | 191 | 224 | 126 | 115 |
| Pour Point, °F | — | — | — | — | — |
| °C | — | — | — | — | — |
| Viscosity, cst (40°C) | — | — | — | — | — |
| IBP, °F | — | — | — | — | — |
| °C | — | — | — | — | — |
| IBP—360°F (182°C), wt% | — | — | — | — | — |
| 360°F (182°C)—650°F (343°C), wt% | — | — | — | — | — |
| 650°F+ (343°C+), wt% | — | — | — | — | — |
| FBP, °F | — | — | — | — | — |
| °C | — | — | — | — | — |
| Gas rate, m$^3$/m$^3$ (SCFB) $\times 10^3$ | — | — | — | — | — |
| Hydrogen consumption, m$^3$/m$^3$ (SCFB) | — | — | — | — | — |
| Wt% recovered | — | — | — | — | — |
| Wt% $C_1$—$C_4$ on Feed | — | — | — | — | — |

TABLE IX (Contd.)

| Period No. | 11 | 12 | 13 |
|---|---|---|---|
| Hours on Stream | 259 | 283 | 307 |
| Temperature, °F | 780 | 779 | 779 |
| °C | 416 | 415 | 415 |
| Pressure, psig | 1,800 | 1,800 | 1,800 |
| kPa | 12,402 | 12,402 | 12,402 |
| LHSV, hr⁻¹ | 0.5 | 0.5 | 0.5 |
| Gravity, °API | 36.1 | 36.1 | 35.8 |
| Carbon, wt% | — | — | — |
| Hydrogen, wt% | — | — | — |
| Nitrogen, ppm | 619 | 773 | 946 |
| Sulfur, ppm | 64 | 193 | 109 |
| Pour Point, °F | — | 69 | — |
| °C | — | 21 | — |
| Viscosity, cst (40°C) | — | 4.01 | — |
| IBP, °F | — | — | — |
| °C | — | — | — |
| IBP—360°F (182°C), wt% | — | — | — |
| 360°F (182°C)—650°F (343°C), wt% | — | — | — |
| 650°F+ (343°C+), wt% | — | — | — |
| FBP, °F | — | — | — |
| °C | — | — | — |
| Gas rate, m³/m³ (SCFB) ×10³ | — | — | — |
| Hydrogen consumption, m³/m³ (SCFB) | — | — | — |
| Wt% recovered | — | — | — |
| Wt% C₁—C₄ on Feed | — | — | — |

A comparison of the denitrogenation abilities of the various catalysts is presented in the accompanying figure. In this figure, the amount of nitrogen in the product is plotted versus the amount of silica in the catalyst support. The amount of nitrogen in the product for each test was obtained as an arithmetic average of the values of the nitrogen level for the first seven days of that test. If an obvious upset or irregularity was associated with a particular value, that value was not included in the average. The figure demonstrates that a catalyst having a hydrogenation component as defined hereinabove and a support containing from about 10 wt% silica to about 50 wt% silica will provide improved denitrogenation of a whole shale oil.

**Claims for the Contracting States: BE, CH, DE, FR, GB, IT, LI, NL, SE**

1. A catalyst for use in the hydrodenitrogenation of a nitrogen-containing hydrocarbon stream having a nitrogen content of at least 0.2 weight percent selected from the group consisting of heavy petroleum

**0 050 912**

hydrocarbon streams, petroleum hydrocarbon distillates, hydrocarbon streams derived from coal, hydrocarbon streams derived from tar sands and hydrocarbon streams derived from oil shale, said catalyst comprising a hydrogenation component comprising metals from Groups VIB and VIII of the Periodic Table of the Elements deposited upon a porous refractory inorganic oxide support, said elements from Groups VIB and VIII of the Periodic Table being present in the elemental form or as oxides, as sulfides, or mixtures thereof, characterised in that both chromium and molybdenum selected from Group VIB are present in said hydrogenation component in association with at least one metal from Group VIII, and in that said inorganic oxide support is a silica alumina support in which the silica is present in an amount within the range of from 10 wt% to 50 wt% based upon the weight of said support.

2. A catalyst according to Claim 1, further characterised in that chromium is present in an amount within the range of 3 wt% of 15 wt%, calculated as $Cr_2O_3$ and based upon the weight of said catalyst, molybdenum is present in an amount within the range of 5 wt% to 25 wt%, calculated as $MoO_3$ and based upon the weight of said catalyst, and said metal from Group VIII is present in an amount within the range of 0.5 wt% to 10 wt%, calculated as the oxide and based upon the weight of said catalyst.

3. A catalyst according to Claim 1 or 2, further characterised in that said catalyst has a surface area within the range of 150 m²/gm to 350 m²/gm, a pore volume within the range of 0.4 cc/gm to 1.0 cc/gm, and an average pore diameter within the range of 60 Å (6 nm) to 150 Å (15 nm).

4. A catalyst according to any of Claims 1 to 3, further characterised in that said metal of Group VIII is a non-noble metal.

5. The catalyst of Claim 4, further characterised in that said metal of Group VIII is cobalt or nickel.

6. The catalyst of Claim 5, further characterised in that said metal of Group VIII is cobalt.

7. A catalyst according to any of Claims 1 to 6, further characterised in that the silica of said support is present in an amount within the range of 15 wt% to 45 wt% silica, based upon the weight of said support.

8. A process for the hydrodenitrogenation of a nitrogen-containing hydrocarbon stream having a nitrogen content of at least 0.2 percent by weight selected from the group consisting of heavy petroleum hydrocarbon streams petroleum hydrocarbon distillates, hydrocarbon streams derived from coal, hydrocarbon streams derived from tar sands and hydrocarbon streams derived from oil shale, which process comprises contacting said stream in a reaction zone in the presence of hydrogen and under hydrodenitrogenation conditions with a catalyst comprising a hydrogenation component comprising metals from Groups VIB and VIII of the Periodic Table of the Elements deposited upon a refractory inorganic oxide support, said elements from Groups VIB and VIII of the Periodic Table being present in the elemental form or as oxides, as sulfides, or mixtures thereof, characterised in that both chromium and molybdenum selected from Group VIB are present in said hydrogenation component in association with at least one metal from Group VIII, and in that said inorganic oxide support is a silica alumina support in which the silica is present in an amount within the range of from 10 wt% to 50 wt% based upon the weight of said support.

9. A process according to Claim 8, wherein said hydrodenitrogenation conditions comprise a temperature within the range of 700°F (371°C) to 800°F (427°C), a hydrogen partial pressure within the range of 1,000 psi (6,890 kPa) to 2,500 psi (17,225 kPa), a LHSV within the range of 0.1 volume of hydrocarbon per hour per volume of catalyst to 5 volumes of hydrocarbon per hour per volume of catalyst, and a hydrogen recycle rate or hydrogen addition rate within the range of 2,000 SCFB (359 m³/m³) to 20,000 SCFB (3,596 m³/m³).

10. A process according to Claim 8 or Claim 9, further characterised in that said stream consists of a heavy petroleum hydrocarbon selected from virgin gas oils, vacuum gas oils and coker gas oils.

11. A process according to Claim 8 or Claim 9, further characterised in that said stream is a hydrocarbon stream derived from oil shale which is a whole shale oil or a fraction thereof.

**Claims for the Contracting State: AT**

1. A process of preparing a catalyst for use in the hydrodenitrogenation of a nitrogen-containing hydrocarbon stream having a nitrogen content of at least 0.2 % by weight selected from the group consisting of heavy petroleum hydrocarbon streams, petroleum hydrocarbon distillates, hydrocarbon streams derived from coal, hydrocarbon streams derived from tar sands and hydrocarbon streams derived from oil shale, in which a hydrogenation component comprising metals from Groups VIB and VIII of the Periodic Table of the Elements, is deposited upon a porous refractory inorganic oxide support, the metals from Groups VIB and VIII being present in the elemental form or as oxides, sulfides or mixtures thereof, characterised in that both chromium and molybdenum selected from Group VIB are present in said hydrogenation component in association with at least one metal from Group VIII, and in that said inorganic oxide support is a silica alumina support in which the silica is present in an amount within the range of from 10 wt% to 50 wt% based upon the weight of said support.

2. A process according to Claim 1, further characterised in that chromium is present in an amount within the range of 3 wt% to 15 wt%, calculated as $Cr_2O_3$ and based upon the weight of said catalyst, molybdenum is present in an amount within the range of 5 wt% to 25 wt%, calculated as $MoO_3$ and based upon the weight of said catalyst, and said metal from Group VIII is present in an amount within the range of 0.5 wt% to 10 wt%, calculated as the oxide and based upon the weight of said catalyst.

29

**0 050 912**

3. A process according to Claim 1 or Claim 2, further characterised in that said catalyst has a surface area within the range of 150 m$^2$/gm to 350 m$^2$/gm, a pore volume within the range of 0.4 cc/gm to 1.0 cc/gm, and an average pore diameter within the range of 60 Å (6 nm) to 150 Å (15 nm).

4. A process according to any of Claims 1 to 3, further characterised in that said metal of Group VIII is a non-noble metal.

5. A process of Claim 4, further characterised in that said metal of Group VIII is cobalt or nickel.

6. A process of Claim 5, further characterised in that said metal of Group VIII is cobalt.

7. A process according to any of Claims 1 to 6, further characterised in that the silica of said support is present in an amount within the range of 15 wt% to 45 wt% silica, based upon the weight of said support.

8. A process for the hydrodenitrogenation of a nitrogen-containing hydrocarbon stream having a nitrogen content of at least 0.2 percent by weight selected from the group consisting of heavy petroleum hydrocarbon streams, petroleum hydrocarbon distillates, hydrocarbon streams derived from coal, hydrocarbon streams derived from tar sands and hydrocarbon streams derived from oil shale, which process comprises contacting said stream in a reaction zone in the presence of hydrogen and under hydrodenitrogenation conditions with a catalyst comprising a hydrogenation component comprising metals from Groups VIB and VIII of the Periodic Table of the Elements deposited upon a porous refractory inorganic oxide support, said elements from Groups VIB and VIII of the Periodic Table being present in the elemental form or as oxides, as sulfides, or mixtures thereof, characterised in that both chromium and molybdenum selected from Group VIB are present in said hydrogenation component in association with at least one metal from Group VIII, and in that said inorganic oxide support is a silica alumina support in which the silica is present in an amount within the range of from 10 wt% to 50 wt% based upon the weight of said support.

9. A process according to Claim 8, wherein said hydrodenitrogenation conditions comprise a temperature within the range of 700°F (371°C) to 800°F (427°C), a hydrogen partial pressure within the range of 1,000 psi (6,890 kPa) to 2,500 psi (17,225 kPa), a LHSV within the range of 0.1 volume of hydrocarbon per hour per volume of catalyst to 5 volumes of hydrocarbon per hour per volume of catalyst, and a hydrogen recycle rate or hydrogen addition rate within the range of 2,000 SCFB (359 m$^3$/m$^3$) to 20,000 SCFB (3,596 m$^3$/m$^3$).

10. A process according to Claim 8 or Claim 9, further characterised in that said stream consists of a heavy petroleum hydrocarbon selected from virgin gas oils, vacuum gas oils and coker gas oils.

11. A process according to Claim 8 or Claim 9, further characterised in that said stream is a hydrocarbon stream derived from oil shale which is a whole shale oil or a fraction thereof.

**Claims for the Contracting State: AT**

1. A process of preparing a catalyst for use in the hydrodenitrogenation of a nitrogen-containing hydrocarbon stream having a nitrogen content of at least 0.2 % by weight selected from the group consisting of heavy petroleum hydrocarbon streams, petroleum hydrocarbon distillates, hydrocarbon streams derived from coal, hydrocarbon streams derived from tar sands and hydrocarbon streams derived from oil shale, in which a hydrogenation component comprising metals from Groups VIB and VIII of the Periodic Table of the Elements, is deposited upon a porous refractory inorganic oxide support, the metals from Groups VIB and VIII being present in the elemental form or as oxides, sulfides or mixtures thereof, characterised in that both chromium and molybdenum selected from Group VIB are present in said hydrogenation component in association with at least one metal from Group VIII, and in that said inorganic oxide support is a silica alumina support in which the silica is present in an amount within the range of from 10 wt% to 50 wt% based upon the weight of said support.

2. A process according to Claim 1, further characterised in that chromium is present in an amount within the range of 3 wt% to 15 wt%, calculated as $Cr_2O_3$ and based upon the weight of said catalyst, molybdenum is present in an amount within the range of 5 wt% to 25 wt%, calculated as $MoO_3$ and based upon the weight of said catalyst, and said metal from Group VIII is present in an amount within the range of 0.5 wt% to 10 wt%, calculated as the oxide and based upon the weight of said catalyst.

3. A process according to Claim 1 or Claim 2, further characterised in that said catalyst has a surface area within the range of 150 m$^2$/gm to 350 m$^2$/gm, a pore volume within the range of 0.4 cc/gm to 1.0 cc/gm, and an average pore diameter within the range of 60 Å (6 nm) to 150 Å (15 nm).

4. A process according to any of Claims 1 to 3, further characterised in that said metal of Group VIII is a non-noble metal.

5. A process of Claim 4, further characterised in that said metal of Group VIII is cobalt or nickel.

6. A process of Claim 5, further characterised in that said metal of Group VIII is cobalt.

7. A process according to any of Claims 1 to 6, further characterised in that the silica of said support is present in an amount within the range of 15 wt% to 45 wt% silica, based upon the weight of said support.

8. A process for the hydrodenitrogenation of a nitrogen-containing hydrocarbon stream having a nitrogen content of at least 0.2 percent by weight selected from the group consisting of heavy petroleum hydrocarbon streams, petroleum hydrocarbon distillates, hydrocarbon streams derived from coal, hydrocarbon streams derived from tar sands and hydrocarbon streams derived from oil shale, which process comprises contacting said stream in a reaction zone in the presence of hydrogen and under

# 0 050 912

hydrodenitrogenation conditions with a catalyst comprising a hydrogenation component comprising metals from Groups VIB and VIII of the Periodic Table of the Elements deposited upon a porous refractory inorganic oxide support, said elements from Groups VIB and VIII of the Periodic Table being present in the elemental form or as oxides, as sulfides, or mixtures thereof, characterised in that both chromium and molybdenum selected from Group VIB are present in said hydrogenation component in association with at least one metal from Group VIII, and in that said inorganic oxide support is a silica alumina support in which the silica is present in an amount within the range of from 10 wt% to 50 wt% based upon the weight of said support.

9. A process according to Claim 8, wherein said hydrodenitrogenation conditions comprise a temperature within the range of 700°F (371°C) to 800°F (427°C), a hydrogen partial pressure within the range of 1,000 psi (6,890 kPa) to 2,500 psi (17,225 kPa), a LHSV within the range of 0.1 volume of hydrocarbon per hour per volume of catalyst to 5 volumes of hydrocarbon per hour per volume of catalyst, and a hydrogen recycle rate or hydrogen addition rate within the range of 2,000 SCFB (359 m$^3$/m$^3$) to 20,000 SCFB (3,596 m$^3$/m$^3$).

10. A process according to Claim 8 or Claim 9, further characterised in that said stream consists of a heavy petroleum hydrocarbon selected from virgin gas oils, vacuum gas oils and coker gas oils.

11. A process according to Claim 8 or Claim 9, further characterised in that said stream is a hydrocarbon stream derived from oil shale which is a whole shale oil or a fraction thereof.

**Patentansprüche für die Vertragsstaaten: BE, CH, DE, FR, GB, IT, LI, NL, SE**

1. Katalysator für die Verwendung bei der Hydrodenitrogenierung eines Stickstoff enthaltenden Kohlenwasserstoffstroms mit einem Stickstoffgehalt von zumindest 0,2 Gew.-%, ausgewählt unter schweren Erdölkohlenwasserstoffströmen, Erdölkohlenwasserstoffdestillaten, von Kohle abgeleiteten Kohlenwasserstoffströmen, von Schwerölsanden abgeleiteten Kohlenwasserstoffströmen und von Ölschiefer abgeleiteten Kohlenwasserstoffströmen, der eine Hydrierungskomponente umfaßt, die Metalle der Gruppen VIB und VIII des Periodensystems der Elemente, abgeschieden auf einem porösen, feuerfesten anorganischen Oxidträger umfaßt, wobei die Elemente der Gruppen VIB und VIII des Periodensystems in elementarer Form oder als Oxide, Sulfide oder deren Gemische vorliegen, dadurch gekennzeichnet, daß sowohl aus der Gruppe VIB ausgewähltes Chrom als auch Molybdän in der Hydrierungskomponente zusammen mit zumindest einem Metall der Gruppe VIII vorliegen, und daß der anorganische Oxidträger ein Siliciumdioxid-Aluminiumoxid-Träger ist, in dem das Siliciumdioxid in einer Menge von 10 Gew.-% bis 50 Gew.-% bezogen auf das Gewicht des Trägers vorliegt.

2. Katalysator gemäß Anspruch 1, dadurch gekennzeichnet, daß das Chrom in einer Menge von 3 Gew.-% bis 15 Gew.-% berechnet als $Cr_2O_3$ und bezogen auf das Gewicht des Katalysators, vorliegt, das Molybdän in einer Menge von 5 Gew.-% bis 25 Gew.-%, berechnet als $MoO_3$, bezogen auf das Gewicht des Katalysators, vorliegt und das Metall der Gruppe VIII in einer Menge von 0,5 Gew.-% bis 10 Gew.-%, berechnet als Oxid und bezogen auf das Gewicht des Katalysators, vorliegt.

3. Katalysator gemäß Anspruch 1 oder 2, dadurch gekennzeichnet, daß der Katalysator eine spezifische Oberfläche von 150 m$^2$/g bis 350 m$^2$/g, ein Porenvolumen von 0,4 cm$^3$/g bis 1,0 cm$^3$/g und einen durchschnittlichen Porendurchmesser von 60 Å (6 nm) bis 150 Å (15 nm) besitzt.

4. Katalysator gemäß einem der Ansprüche 1 bis 3, dadurch gekennzeichnet, daß das Metall der Gruppe VIII ein Nicht-Edelmetall ist.

5. Katalysator gemäß Anspruch 4, dadurch gekennzeichnet, daß das Metall der Gruppe VIII Kobalt oder Nickel ist.

6. Katalysator gemäß Anspruch 5, dadurch gekennzeichnet, daß das Metall der Gruppe VIII Kobalt ist.

7. Katalysator gemäß einem der Ansprüche 1 bis 6, dadurch gekennzeichnet, daß das Siliciumdioxid des Trägers in einer Menge von 15 Gew.-% bis 45 Gew.-% Siliciumdioxid, bezogen auf das Gewicht des Trägers, vorliegt.

8. Verfahren zur Hydrodenitrogenierung eines Stickstoff enthaltenden Kohlenwasserstoffstroms mit einem Stickstoffgehalt von zumindest 0,2 Gew.-%, ausgewählt unter schweren Erdölkohlenwasserstoffströmen, Erdölkohlenwasserstoffdestillaten, von Kohle abgeleiteten Kohlenwasserstoffströmen, von Schwerölsanden abgeleiteten Kohlenwasserstoffströmen und von Ölschiefer abgeleiteten Kohlenwasserstoffströmen, bei dem dieser Strom in einer Reaktionszone in Gegenwart von Wasserstoff und unter Hydrodenitrogenierungsbedingungen mit einem Katalysator in Kontakt gebracht wird, der eine Hydrierungskomponente umfaßt, die Metalle aus den Gruppen VIB und VIII des Periodensystems der Elemente, abgeschieden auf einem feuerfesten, anorganischen Oxidträger, umfaßt, wobei die Elemente der Gruppen VIB und VIII des Periodensystems in elementarer Form oder als Oxide, Sulfide oder deren Gemische vorliegen, dadurch gekennzeichnet, daß sowohl aus der Gruppe VIB ausgewähltes Chrom als auch Molybdän in der Hydrierungskomponente zusammen mit zumindest einem Metall der Gruppe VIII vorliegen, und daß der anorganische Oxidträger ein Siliciumdioxid-Aluminiumoxid-Träger ist, in dem das Siliciumdioxid in einer Menge von 10 Gew.-% bis 50 Gew.-%, bezogen auf das Gewicht des Trägers, vorliegt.

9. Verfahren gemäß Anspruch 8, dadurch gekennzeichnet, daß die Hydrodenitrogenierungsbedingungen eine Temperatur von 700°F (371°C) bis 800°F (427°C), einen Wasserstoffpartialdruck von 1000 psi (6890 kPa) bis 2500 psi (17225 kPa), eine LHSV von 0,1 Volumen Kohlenwasserstoff je Stunde je Volumen Katalysator bis 5 Volumen Kohlenwasserstoff je Stunde je Volumen Katalysator und eine Wasserstoffrecyclisierungsrate oder Wasserstoffzugaberate von 2000 SCFB (359 m$^3$/m$^3$) bis 20000 SCFB (3596 m$^3$/m$^3$) umfassen.

10. Verfahren gemäß Anspruch 8 oder 9, dadurch gekennzeichnet, daß der Strom aus einem schweren Erdölkohlenwasserstoff, ausgewählt unter ursprünglichen Gasölen, Vakuumgasölen und Koksgasölen besteht.

11. Verfahren gemäß Anspruch 8 oder Anspruch 9, dadurch gekennzeichnet, daß der Strom ein Kohlenwasserstoffstrom ist, der Ölschiefer entstammt, bei dem es sich um ein vollständiges Schieferöl oder eine Fraktion hiervon handelt.

## Patentansprüche für den Vertragsstaat: AT

1. Verfahren zur Herstellung eines Katalysators für die Verwendung bei der Hydrodenitrogenierung eines Stickstoff enthaltenden Kohlenwasserstoffstroms mit einem Stickstoffgehalt von zumindest 0,2 Gew.-%, ausgewählt unter schweren Erdölkohlenwasserstoffströmen, Erdölkohlenwasserstoffdestillaten, von Kohle abgeleiteten Kohlenwassrsstoffströmen, von Schwerölsanden abgeleiteten Kohlenwasserstoffströmen und von Ölschiefer abgeleiteten Kohlenwasserstoffströmen, in dem eine Hydrierungskomponente, die Metalle der Gruppen VIB und VIII des Periodensystems der Elemente umfaßt, auf einem porösen, feuerfesten anorganischen Oxidträger abgeschieden wird, wobei die Metalle der Gruppen VIB und VIII in elementarer Form oder als Oxide, Sulfide oder in Form von deren Mischungen vorliegen, dadurch gekennzeichnet, daß sowohl aus der Gruppe VIB ausgewähltes Chrom als auch Molybdän in der Hydrierungskomponente zusammen mit zumindest einem Metall der Gruppe VIII vorliegen und daß der anorganische Oxidträger ein Siliciumdioxid-Aluminiumoxid-Träger ist, in dem das Siliciumdioxid in einer Menge von 10 Gew.-% bis 50 Gew.-%, bezogen auf das Gewicht des Trägers, vorliegt.

2. Verfahren gemäß Anspruch 1, dadurch gekennzeichnet, daß das Chrom in einer Menge von 3 Gew.-% bis 15 Gew.-%, berechnet also Cr$_2$O$_3$ und bezogen auf das Gewicht des Katalysators vorliegt, das Molybdän in einer Menge von 5 Gew.-% bis 25 Gew.-%, berechnet als MoO$_3$ und bezogen auf das Gewicht des Katalysators, vorliegt und das Metall der Gruppe VIII in einer Menge von 0,5 Gew.-% bis 10 Gew.-%, berechnet als Oxid und bezogen auf das Gewicht des Katalysators, vorliegt.

3. Verfahren gemäß Anspruch 1 oder 2, dadurch gekennzeichnet, daß der Katalysator eine spezifische Oberfläche von 150 m$^2$/g bis 350 m$^2$/g, ein Porenvolumen von 0,4 cm$^3$/g bis 1,0 cm$^3$/g und einen durchschnittlichen Porendurchmesser von 60 Å (6 nm) bis 150 Å (15 nm) besitzt.

4. Verfahren gemäß einem der Ansprüche 1 bis 3, dadurch gekennzeichnet, daß das Metall der Gruppe VIII ein Nicht-Edelmetall ist.

5. Verfahren gemäß Anspruch 4, dadurch gekennzeichnet, daß das Metall der Gruppe VIII Kobalt oder Nickel ist.

6. Verfahren gemäß Anspruch 5, dadurch gekennzeichnet, daß das Metall der Gruppe VIII Kobalt ist.

7. Verfahren gemäß einem der Ansprüche 1 bis 6, dadurch gekennzeichnet, daß das Siliciumdioxid des Trägers in einer Menge von 15 Gew.-% bis 45 Gew.-% Siliciumdioxid, bezogen auf das Gewicht des Trägers, vorliegt.

8. Verfahren zur Hydrodenitrogenierung eines Stickstoff enthaltenden Kohlenwasserstoffstroms mit einem Stickstoffgehalt von zumindest 0,2 Gew.-%, ausgewählt unter schweren Erdölkohlenwasserstoffströmen, Erdölkohlenwasserstoffdestillaten, von Kohle abgeleiteten Kohlenwasserstoffströmen, von Schwerölsanden abgeleiteten Kohlenwasserstoffströmen und von Ölschiefer abgeleiteten Kohlenwasserstoffströmen, bei dem man den Strom in einer Reaktionszone in Gegenwart von Wasserstoff und unter Hydrodenitrogenierungsbedingungen mit einem Katalysator in Kontakt bringt, der eine Hydrierungskomponente umfaßt, die Metalle der Gruppen VIB und VIII des Periodensystems der Elemente, abgeschieden auf einem porösen, feuerfesten anorganischen Oxidträger, umfaßt, wobei die Elemente der Gruppen VIB und VIII des Periodensystems in elementarer Form oder als Oxide, als Sulfide oder in Form von deren Mischungen vorliegen, dadurch gekennzeichnet, daß sowohl aus der Gruppe VIB ausgewähltes Chrom als auch Molybdän in der Hydrierungskomponente gemeinsam mit zumindest einem Metall der Gruppe VIII vorliegen, und daß der anorganische Oxidträger ein Siliciumdioxid-Aluminiumoxid-Träger ist, in dem das Siliciumdioxid in einer Menge im Bereich von 10 Gew.-% bis 50 Gew.-%, bezogen auf das Gewicht des Trägers vorliegt.

9. Verfahren gemäß Anspruch 8, dadurch gekennzeichnet, daß die Hydrodenitrogenierungsbedingungen eine Temperatur im Bereich von 700°F (371°C) bis 800°F (427°C), einen Wasserstoffpartialdruck von 1000 psi (6890 kPa) bis 2500 psi (17225 kPa), eine LHSV im Bereich von 0,1 Volumen Kohlenwasserstoff je Stunde je Volumen Katalysator bis 5 Volumina Kohlenwasserstoff je Stunde je Volumen Katalysator und eine Wasserstoffrecyclisierungsrate oder Wasserstoffzugaberate im Bereich von 2000 SCFB (359 m$^3$/m$^3$) bis 20000 SCFB (3596 m$^3$/m$^3$) umfassen.

10. Verfahren gemäß Anspruch 8 oder 9, dadurch gekennzeichnet, daß der Strom aus einem schweren Erdölkohlenwasserstoffstrom, ausgewählt unter ursprünglichen Gasölen, Vakuumgasölen und Koksgasölen besteht.

11. Verfahren gemäß Anspruch 8 oder 9, dadurch gekennzeichnet, daß der Strom ein Kohlenwasserstoffstrom ist, der sich von Ölschiefer ableitet, bei dem es sich um ein vollständiges Schieferöl oder eine Fraktion hiervon handelt.

**Revendications pour les Etats contractants: BE, CH, DE, FR, GB, IT, LI, NL, SE**

1. Un catalyseur destiné à être utilisé dans l'hydro-élimination de l'azote d'un courant d'hydrocarbures contenant de l'azote ayant un contenu en azote d'au moins 0,2 % en poids choisi dans le groupe constitué de courants d'hydrocarbures de pétrole lourd, de destillats d'hydrocarbures de pétrole, de courants d'hydrocarbures dérivés de charbon, de courants d'hydrocarbures dérivés de sables asphaltiques et de courants d'hydrocarbures dérivés de schiste bitumineux, ledit catalyseur comprenant un composé d'hydrogénation comprenant des métaux des groupes VIB et VIII du tableau périodique des éléments déposés sur un support d'oxyde minéral réfractaire poreux, lesdits éléments VIB et VIII du tableau périodique étant présents sous forme élémentaire ou d'oxydes, de sulfures ou leurs mélanges, caractérisé en ce qu'à la fois le chrome et le molybdène choisis dans le groupe VIB sont présents dans ledit composé d'hydrogénation en association avec au moins un métal du groupe VIII, et en ce que ledit support d'oxyde minéral est un support d'alumine et de silice dans lequel la silice est présente en quantité dans le domaine allant de 10 à 50 % en poids calculée sur le poids dudit support.

2. Un catalyseur selon la revendication 1, caractérisé en outre en ce que le chrome est présent en quantité allant dans le domaine de 3 % à 15 % en poids, calculé en tant que $Cr_2O_3$ et basé sur le poids dudit catalyseur, le molybdène est présent en quantité allant dans le domaine de 5 % à 25 % en poids, calculé sur la base de $MoO_3$ et basé sur le poids dudit catalyseur et ledit métal du groupe VIII est présent en quantité dans le domaine allant de 0,5 % à 10 % en poids, calculé sous forme d'oxyde et basé sur le poids dudit catalyseur.

3. Un catalyseur selon la revendication 1 ou 2, caractérisé en outre en ce que ledit catalyseur a une surface spécifique dans le domaine de 150 m²/g à 350 m²/g, un volume de pores de 0,4 cc/g à 1,0 cc/g, un diamètre moyen de pores dans le domaine de 60 Å (6 nm) à 150 Å (15 nm).

4. Un catalyseur selon l'une quelconque des revendications 1 à 3, caractérisé en outre en ce que ledit métal du groupe VIII est un métal non noble.

5. Un catalyseur selon la revendication 4, caractérisé en outre en ce que ledit métal du groupe VIII est du cobalt ou du nickel.

6. Un catalyseur selon la revendication 5, caractérisé en outre en ce que ledit métal du groupe VIII est du cobalt.

7. Un catalyseur selon l'une quelconque des revendications 1 à 6, caractérisé en outre en ce que la silice dudit support est présente en quantité allant dans le domaine de 15 % à 45 % en poids, basée sur le poids dudit support.

8. Un procédé pour l'hydro-élimination de l'azote d'un courant d'hydrocarbures contenant de l'azote présentant un contenu en azote d'au moins 0,2 % en poids choisi dans le groupe constitué de courants d'hydrocarbures de pétrole lourd, destillats d'hydrocarbures de pétrole, de courants d'hydrocarbures dérivés de charbon, de courants d'hydrocarbures dérivés de sables asphaltiques ou de courants dérivés de schiste bitumineux, lequel procédé comprend la mise en contact dudit courant dans une zone de réaction en présence d'hydrogène et dans des conditions d'hydrogénation avec un catalyseur comprenant un composé d'hydrogénation comprenant des métaux des groupes VIB et VIII du tableau périodique des éléments, déposé sur un support d'oxyde minéral réfractaire, lesdits éléments des groupes VIB et VIII du tableau périodique étant présents sous forme élémentaire ou d'oxydes, de sulfures ou de leurs mélanges, caractérisé en ce qu'à la fois le chrome et le molybdène choisis dans le group VIB sont présents dans lesdits composés d'hydrogénation en association avec au moins un métal du groupe VIII et en ce que ledit support d'oxyde minéral est un support d'alumine et de silice dans lequel la silice est présente en quantité dans le domaine de 10 % à 50 % en poids, calculée sur le poids dudit support.

9. Un procédé selon la revendication 8, dans lequel lesdites conditions d'hydro-élimination de l'azote comprennent une température allant dans le domaine de 700°F (371°C) à 800°F (427°C), une pression partielle d'hydrogène dans le domaine de 1 000 psi (6 890 kPa) à 2 500 psi (17 225 kPa), une vélocité spatiale horaire liquide (LHSV) dans le domaine de 0,1 volume d'hydrocarbure/heure/volume de catalyseur à 5 volumes d'hydrocarbure/heure/volume de catalyseur et un taux de recyclage en hydrogène ou un taux d'addition d'hydrogène dans le domaine de 2 000 SCFB (359 m³/m³) à 20 000 SCFB (3 596 m³/m³).

10. Un procédé selon la revendication 8 ou 9, caractérisé en outre en ce que ledit courant consiste en un hydrocarbure de pétrole lourd choisi parmi les gas-oils vierges, les gas-oils sous vide ét les gas-oils d'unité de cokefaction.

11. Un procédé selon la revendication 8 ou 9, caractérisé en outre en ce que ledit courant est un courant d'hydrocarbure dérivé de schiste bitumineux qui est un schiste bitumineux entier ou une fraction de celui-ci.

**Revendications pour l'Etat contractant: AT**

1. Un procédé de préparation d'un catalyseur destiné à être utilisé dans l'hydro-élimination d'azote d'un courant d'hydrocarbures contenant de l'azote, ayant un contenu en azote d'au moins 0,2 % en poids

**0 050 912**

choisi dans le groupe constitué de courants d'hydrocarbures de pétrole lourd, destillats d'hydrocarbures de pétrole, de courants d'hydrocarbures dérivés de charbon, de courants d'hydrocarbures dérivés de sables asphaltiques et de courants d'hydrocarbures dérivés de schiste bitumineux, dans lequel un composé d'hydrogénation comprenant des métaux des groupes VIB et VIII du tableau périodique des éléments, est déposé sur un support d'oxyde minéral réfractaire poreux, lesdits éléments VIB et VIII du tableau périodique étant présents sous forme élémentaire ou d'oxydes, de sulfures ou leurs mélanges, caractérisé en ce qu'à la fois le chrome et le molybdène choisis dans le groupe VIB sont présents dans ledit composé d'hydrogénation en association avec au moins un métal du groupe VIII, et en ce que ledit support d'oxyde minéral est un support d'alumine et de silice dans lequel la silice est présente en quantité dans le domaine allant de 10 à 50 % en poids calculée sur le poids dudit support.

2. Un procédé selon la revendication 1, caractérisé en ce qu'en outre le chrome est présent en quantité allant dans le domaine de 3 % à 15 % en poids, calculé en tant que $Cr_2O_3$ et basé sur le poids dudit catalyseur, le molybdène est présent en quantité allant dans le domaine de 5 % à 25 % en poids, calculé sur la base de $MoO_3$ et basé sur le poids dudit catalyseur, et ledit métal du groupe VIII est présent en quantité dans le domaine allant de 0,5 % à 10 % en poids, calculé sous forme d'oxyde et basé sur le poids dudit catalyseur.

3. Un procédé selon la revendication 1 ou 2, caractérisé en ce que ledit catalyseur a une surface spécifique dans le domain de 150 $m^2$/g à 350 $m^2$/g, un volume de pores de 0,4 cc/g à 1,0 cc/g, un diamètre moyen de pores dans le domaine de 60 Å (6 nm) à 150 Å (15 nm).

4. Un procédé selon l'une quelconque des revendications 1 à 3, caractérisé en ce qu'en outre ledit métal du groupe VIII est un métal non noble.

5. Un procédé selon la revendication 4, caractérisé en outre en ce que ledit métal du groupe VIII est du cobalt ou du nickel.

6. Un procédé selon la revendication 5, caractérisé en outre en ce que ledit métal du groupe VIII est du cobalt.

7. Un procédé selon l'une quelconque des revendications 1 à 6, caractérisé en outre en ce que la silice dudit support est présente en quantité allant dans le domaine de 15 % à 45 % en poids, basée sur le poids dudit support.

8. Un procédé pour l'hydro-élimination d'un courant d'hydrocarbures contenant de l'azote présentant un contenu en azote d'au moins 0,2 % en poids choisi dans le groupe constitué de courants d'hydrocarbures de pétrole lourd, destillats d'hydrocarbures de pétrole, de courants d'hydrocarbures dérivés de charbon, de courants d'hydrocarbures dérivés de sables asphaltiques ou de courants dérivés de schiste bitumineux, lequel procédé comprend la mise en contact dudit courant dans une zone de réaction en présence d'hydrogène et dans des conditions d'hydro-élimination de l'azote avec un catalyseur comprenant un composé d'hydrogénation comprenant des métaux des groupes VIB et VIII du tableau périodique des éléments, déposé sur un support d'oxyde minéral réfractaire, lesdits éléments des groupes VIB et VIII du tableau périodique étant présents sous forme élémentaire ou d'oxydes, de sulfures ou de leurs mélanges, caractérisé en ce qu'à la fois le chrome et le molybdène choisis dans le groupe VIB sont présents dans lesdits composés d'hydrogénation en association avec au moins un métal du groupe VIII et en ce que ledit support d'oxyde minéral est un support d'alumine et de silice dans lequel la silice est présente en quantité dans le domaine de 10 % à 50 % en poids, calculée sur le poids dudit support.

9. Un procédé selon la revendication 8, dans lequel lesdites conditions d'hydro-élimination de l'azote comprennent une température allant dans le domaine de 700°F (371°C) à 800°F (427°C), une pression partielle d'hydrogène dans le domaine de 1 000 psi (6 890 kPa) à 2 500 psi (17 225 kPa), une vélocité spatiale horaire liquide (LHSV) dans le domaine de 0,1 volume d'hydrocarbure/heure/volume de catalyseur à 5 volumes d'hydrocarbure/heure/volume de catalyseur et un taux de recyclage en hydrogène ou un taux d'addition d'hydrogène dans le domaine de 2 000 SCFB (359 $m^3$/$m^3$) à 20 000 SCFB (3 596 $m^3$/$m^3$).

10. Un procédé selon la revendication 8 ou 9, caractérisé en outre en ce que ledit courant consiste en un hydrocarbure de pétrole lourd choisi parmi les gas-oils vierges, les gas-oils sous vide et les gas-oils d'unité de cokefaction.

11. Un procédé selon la revendication 8 ou 9, caractérisé en ce qu'en outre ledit courant est un courant d'hydrocarbure dérivé de schiste bitumineux qui est un schiste bitumineux entier ou une fraction de celui-ci.

34